# EUROPÄISCHE PATENTSCHRIFT

(11) **EP 0 654 506 B1**
(45) Veröffentlichungstag und Bekanntmachung des Hinweises auf die Patenterteilung: **17.05.2000**
(21) Anmeldenummer: 94810650.5
(22) Anmeldetag: 14.11.1994
(51) Int. Cl.: C09B 67/22, C09B 67/54, C09B 57/00, C09B 48/00

(54) **Verfahren zur Herstellung synergistischer Pigmentgemische**
Process for the manufacture of synergetic mixtures of pigments
Procédé de fabrication de mélanges synergétiques de pigments

(30) Priorität: 22.11.1993 CH 347793
(43) Veröffentlichungstag der Anmeldung: 24.05.1995
(73) Patentinhaber: Ciba Specialty Chemicals Holding Inc., 4057 Basel (CH)
(72) Erfinder: Hao, Zhimin, Dr., CH-1723 Marly (CH); Iqbal, Abul, Dr., CH-1732 Arconciel (CH); Zambounis, John S., Dr., CH-3280 Murten (CH); Medinger, Bernhard, Dr., CH-1735 Giffers (CH)

(56) Entgegenhaltungen:
- EP-A- 0 181 290
- EP-A- 0 376 158
- DE-A- 2 433 692
- US-A- 3 607 336

## Beschreibung

Die vorliegende Anmeldung betrifft ein Verfahren zur Herstellung synergistischer Pigmentgemische durch Vermischen der Lösungen von mindestens zwei durch Einführung von Carbamatgruppen löslich gemachten "Pigmenten" und nachträgliches Ausfällen des Gemisches in Pigmentform durch thermische oder chemische Behandlung, gegebenenfalls nach Einarbeitung im zu pigmentierenden Substrat.

Aus der einschlägigen Literatur ist schon lange bekannt, dass bestimmte Pigmenteigenschaften, sowohl bezüglich Koloristik als auch bezüglich Echtheiten, durch Vermischen verschiedener Pigmenten der gleichen oder auch von mehr oder weniger verwandten Pigmentklassen verbessert werden können. In bestimmten Fällen bilden sich dabei auch sogenannte feste Lösungen oder Mischkristalle. So sind beispielsweise aus den US-Patenten 3 160 510, 3 298 847, 3 647 494 und 3 681 100 feste Lösungen von Chinacridonen, Chinacridonchinonen und/oder Dehydrochinacridonen bekannt, die sich durch hohe Echtheiten und besonderen koloristischen Eigenschaften auszeichnen. Das US-Patent 3 776 749 beschreibt Pigmentgemische aus Azopigmenten und löslichen Azofarbstoffen, die unerwartet hohe Farbstärke und Transparenz zeigen. Pigmentgemische aus zwei oder mehr Perylentetracarbonsäurediamiden mit verbesserter Lichtechtheit und Transparenz im Vergleich zu den Einzelkomponenten sind in DE-A 2 009 073 beschrieben, während aus DE-A 3 436 206, 3 436 208 und 3 436 209 Mischkristalle aus verschiedenen Perylentetracarbonsäurediimide bekannt sind, die sich durch ihre Hitzebeständigkeit auszeichnen. In EP-0 181 290 A2 (entsprechend US-Patent 4 720 305) sind Pigmentgemische aus verschiedenen Diketopyrrolopyrrolen beschrieben, die durch Mischsynthese hergestellt werden und gegenüber den Einzelkomponenten verbesserte Pigmenteigenschaften aufweisen. In diesen Pigmentgemischen ist die zweite Komponente stöchiometrisch begrenzt. Feste Lösungen aus verschiedenen Diketopyrrolopyrrolpigmenten und aus Diketopyrrolopyrrolpigmenten und Chinacridonen sind aus US-Patent 4 783 540 bzw. US-Patent 4 810 304 bekannt. In beiden Fällen handelt es sich um Produkte mit gegenüber den Einzelkomponenten verbesserten Pigmenteigenschaften.

Es wurde nun gefunden, dass u.a. dieselben Pigmentgemische, feste Lösungen bzw. Mischkristalle, mit noch überraschend besseren Eigenschaften erhalten werden können,
wenn man die Einzelkomponenten vorerst durch Einführung von Carbamatgruppen in die Pigmentmoleküle löslich macht, sie danach in einem geeigneten Lösungsmittel löst und in Lösung vermischt und schliesslich durch thermische, oder chemische Behandlung, als Pigmentmischung, feste Lösung bzw. Mischkristalle wieder freisetzt.

Die vorliegende Erfindung betrifft demnach ein Verfahren zur Herstellung synergistischer Pigmentgemische aus mindestens zwei verschiedenen Pigmenten der Chinacridon-, Anthrachinon-, Perylen-, Indigo-, Chinophthalon-, Isoindolinon-, Isoindolin-, Dioxazin-, Phthalocyanin-, Diketopyrrolopyrrol- oder Azoreihe, dadurch gekennzeichnet, dass man mindestens zwei Verbindungen der Formel

A(B)ₓ, (I),

worin x eine ganze Zahl zwischen 1 und 4 bedeutet,

A für den Rest eines Farbstoffes der Chinacridon-, Anthrachinon-, Perylen-, Indigo-, Chinophthalon-, Isoindolinon-, Isoindolin-, Dioxazin-, Phthalocyanin-, Diketopyrrolopyrrol- oder Azoreihe steht, der x mit B verbundene N-Atome, vorzugsweise mit mindestens einer unmittelbar benachbarten oder konjugierten Carbonylgruppe, enthält,
B eine Gruppe der Formel 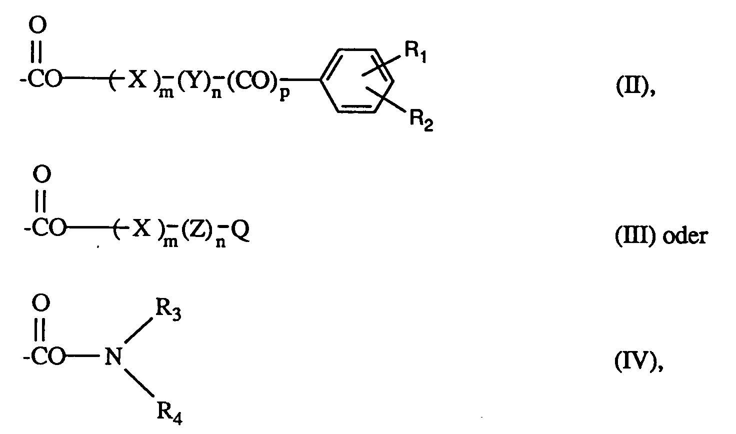 ist, und, wenn x 2, 3 oder 4 bedeutet, auch ein-, zwei- oder dreimal Wasserstoff sein kann, wobei in den Formeln II, III und IV
m, n und p unabhängig voneinander Null oder 1 sind,
X C₁-C₁₄-Alkylen oder C₂-C₈-Alkenylen
Y eine Gruppe -V-(CH₂)_{q}-,
Z eine Gruppe -V-(CH₂)ᵣ-,
V C₃-C₆-Cycloalkylen,
q eine Zahl von 1 bis 6 und
r eine Zahl von Null bis 6 bedeuten,
R₁ und R₂ unabhängig voneinander Wasserstoff, C₁-C₆-Alkyl, C₁-C₄-Alkoxy, Halogen, CN, NO₂, unsubstituiertes oder durch C₁-C₄-Alkyl, C₁-C₄-Alkoxy oder Halogen substituiertes Phenyl oder Phenoxy sind,
Q Wasserstoff, CN, Si(R₁)₃,
eine Gruppe C(R₅)(R₆)(R₇),
worin R₅, R₆ und R₇ unabhängig voneinander Wasserstoff oder Halogen sind und mindestens einer der Reste R₅, R₆ und R₇ Halogen bedeutet,
eine Gruppe 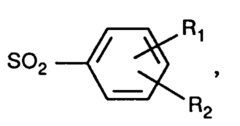 worin R₁ und R₂ die oben angegebene Bedeutung haben,
eine Gruppe SO₂R₈ oder SR₈, worin R₈ C₁-C₄-Alkyl ist,
eine Gruppe CH(R₉)₂, worin R₉ unsubstituiertes oder durch C₁-C₄-Alkyl, C₁-C₄-Alkoxy oder Halogen substituiertes Phenyl bedeutet,
oder
eine Gruppe der Formel 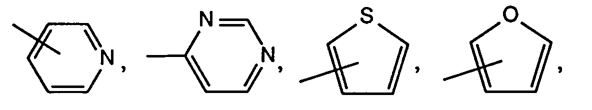 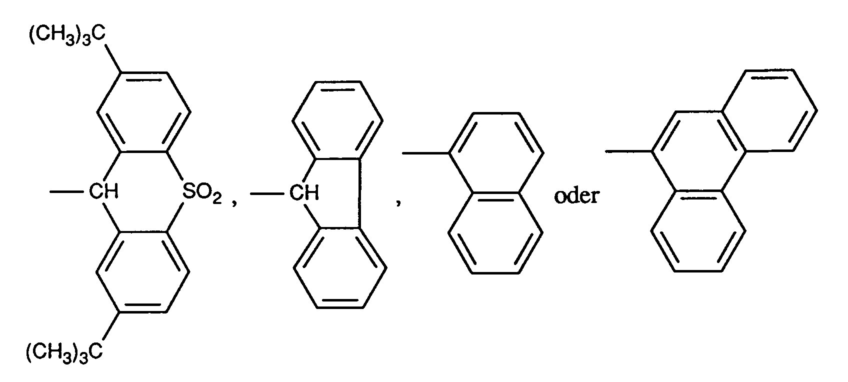 bedeutet,
R₃ und R₄ unabhängig voneinander Wasserstoff, C₁-C₁₈-Alkyl eine Gruppe 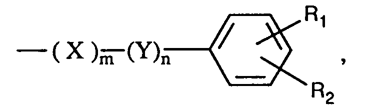 worin X, Y, R₁, R₂, m und n die oben angegebene Bedeutung haben, oder R₃ und R₄ zusammen mit dem Stickstoffatom an dem sie gebunden sind einen Pyrrolidinyl-, Piperidinyl- oder Morpholinylrest bilden,
in Pulverform nach üblichen Methoden vermischt und in einem organischen Lösungsmittel löst oder zuerst einzeln löst und die Lösungen vermischt und danach durch thermische oder chemische Behandlung das Pigmentgemisch bestehend aus den entsprechenden Pigmenten der Formel

A(H)ₓ,

worin A und x die oben angegebene Bedeutung haben, aus dem gelösten Gemisch ausfällt.

A bedeutet den Rest bekannter Chromophore mit der Grundstruktur

A(H)ₓ,

wie beispielsweise 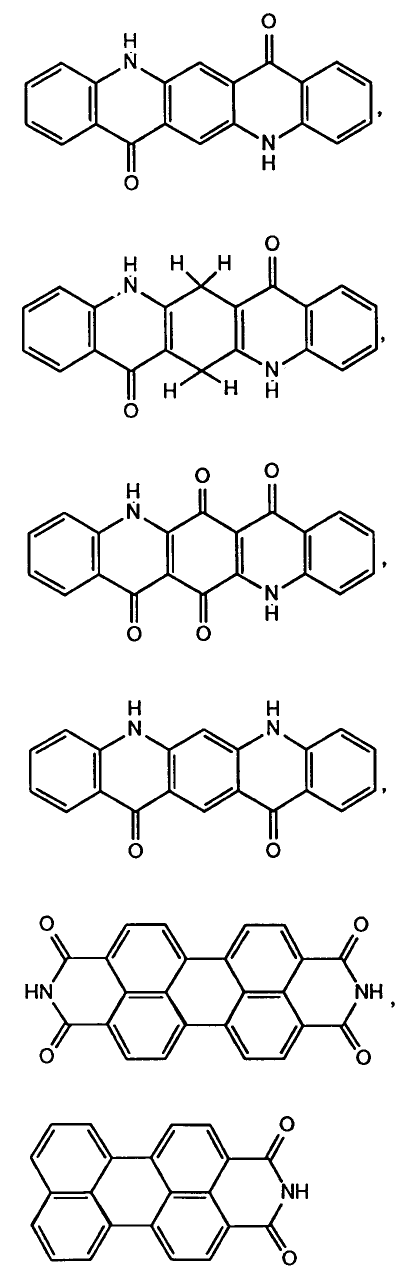 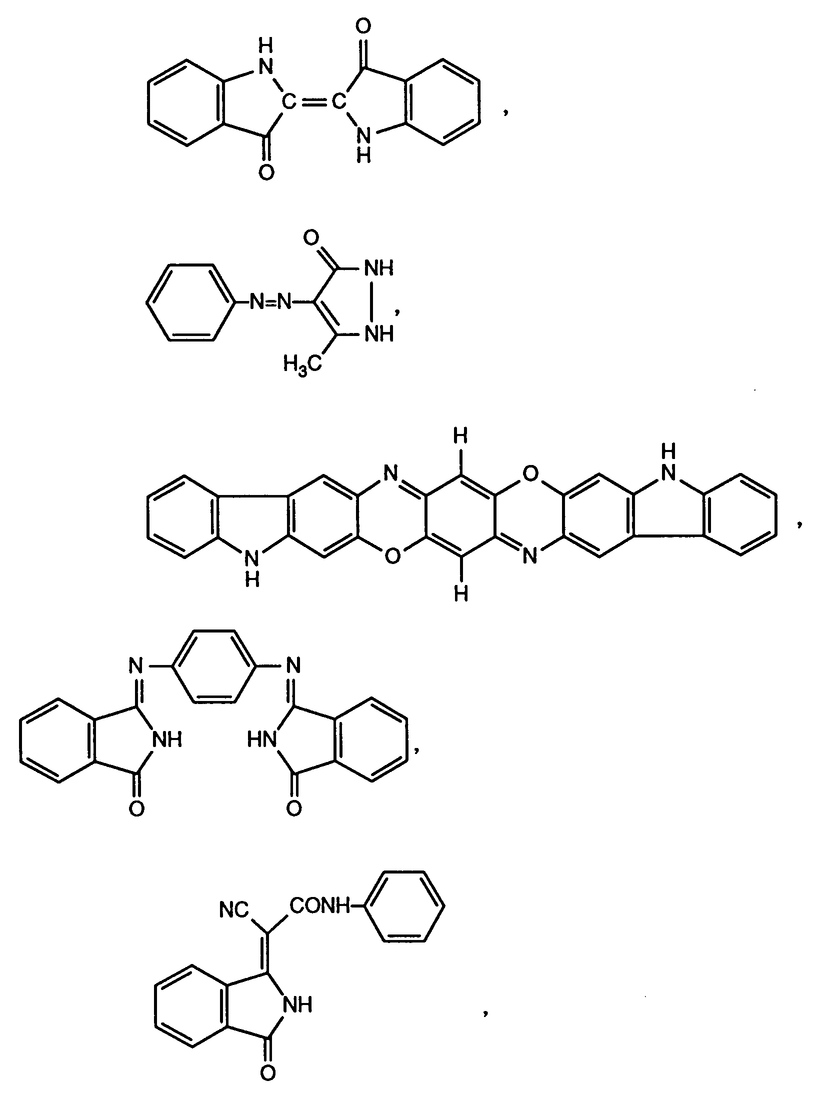 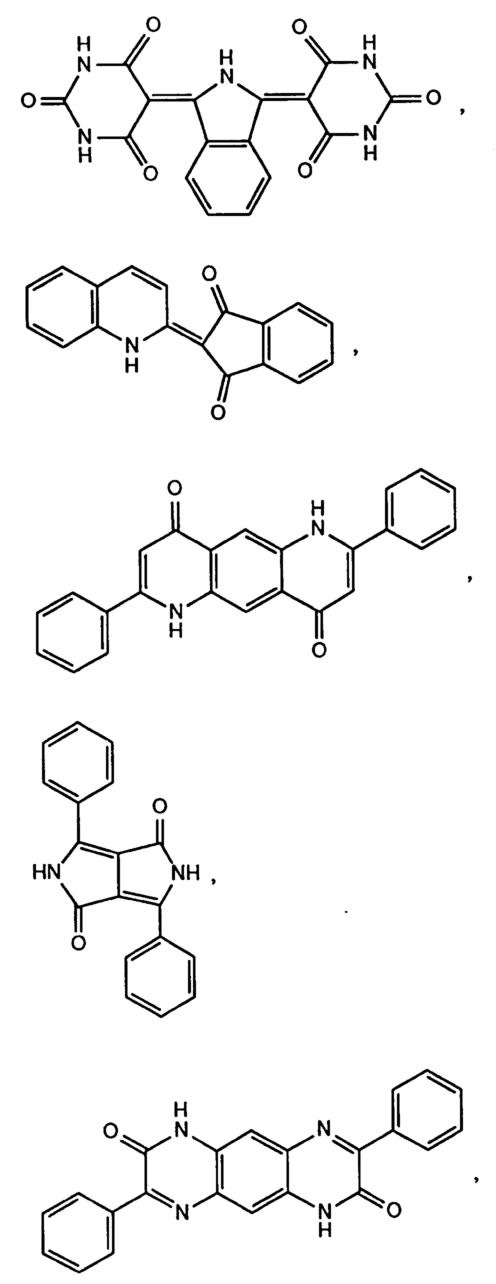 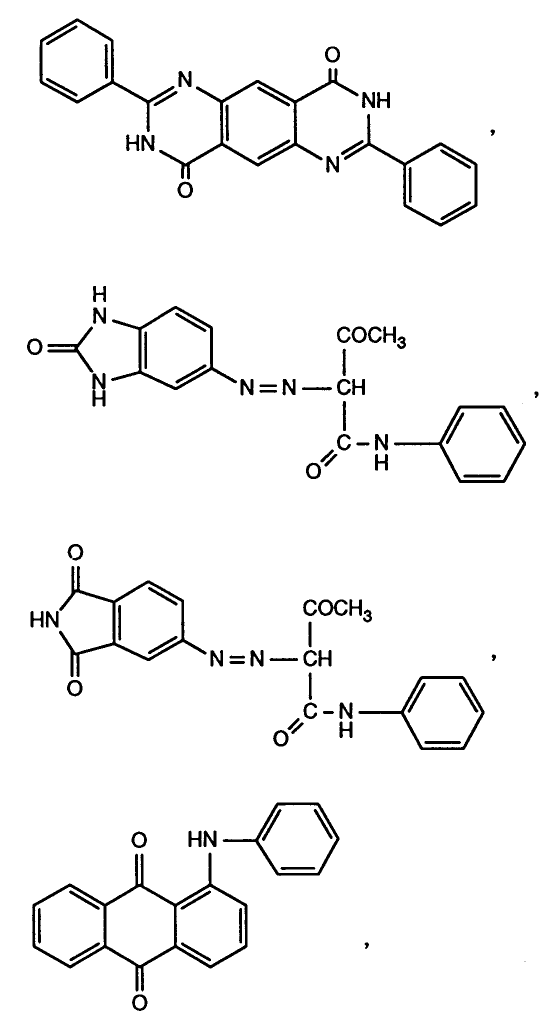 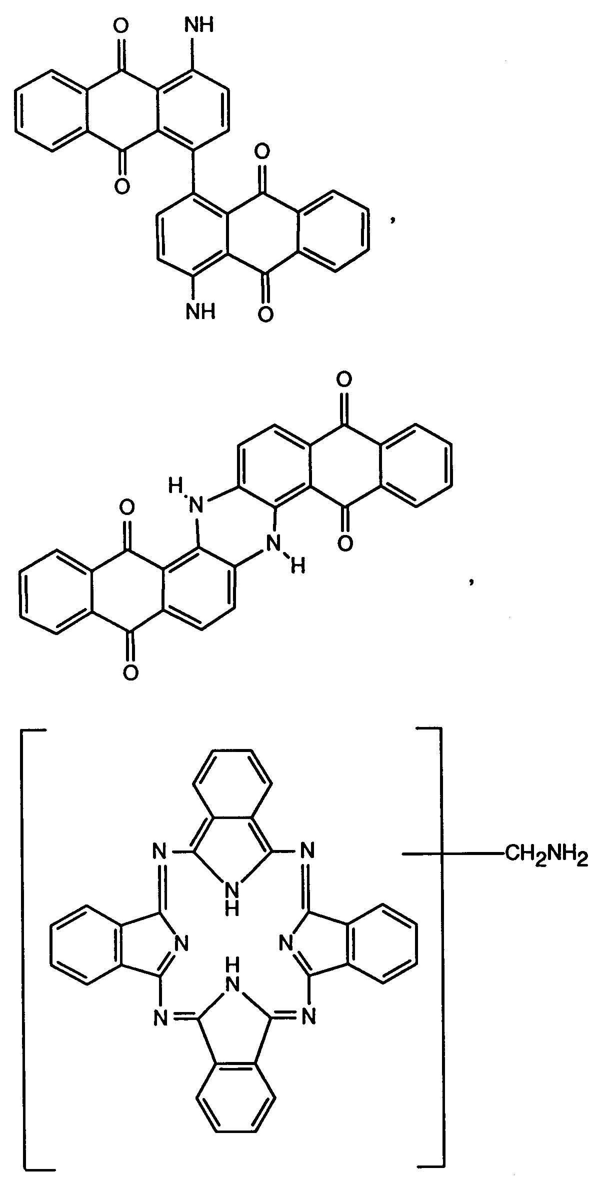 und jeweils alle bekannten Derivate davon.

Bedeutet X C₁-C₁₄-Alkylen, so handelt es sich um ein geradkettiges oder verzweigtes Alkylen, wie z.B. Methylen, Dimethylen, Trimethylen, 1-Methyl-methylen, 1,1-Dimethyl-methylen, 1,1-Dimethyl-dimethylen, 1,1-Dimethyl-trimethylen, 1-Ethyl-dimethylen, 1-Ethyl-1-methyl-dimethylen, Tetramethylen, 1,1-Dimethyl-tetramethylen, 2,2-Dimethyl-trimethylen, Hexamethylen, Decamethylen, 1,1-Dimethyl-decamethylen, 1,1 -Diethyl-decamethylen oder Tetradecamethylen.

X als C₂-C₈-Alkenylen bedeutet geradkettiges oder verzweigtes Alkenylen, wie z.B. Vinylen, Allylen, Methallylen, 1-Methyl-2-butenylen, 1,1-Dimethyl-3-butenylen, 2-Butenylen, 2-Hexenylen, 3-Hexenylen oder 2-Octenylen.

Bedeuten etwaige Substitutenten Halogen, dann handelt es sich z.B. um Jod, Fluor, insbesondere Brom und bevorzugt Chlor;
bei C₁-C₆-Alkyl handelt es sich beispielsweise um Methyl, Ethyl, n-Propyl, Isopropyl, n-Butyl, sec.-Butyl, tert.-Butyl, n-Amyl, tert.-Amyl, Hexyl und bei C₁-C₁₈-Alkyl zusätzlich z.B. um Heptyl, Octyl, 2-Ethylhexyl, Nonyl, Decyl, Dodecyl, Tetradecyl, Hexadecyl oder Octadecyl;
C₁-C₄-Alkoxy bedeutet z.B. Methoxy, Ethoxy, n-Propoxy, Isopropoxy oder Butyloxy.

C₃-C₆-Cycloalkylen steht z.B. für Cyclopropylen, Cyclopentylen und insbesondere für Cyclohexylen.

Für die Durchführung des erfindungsgemässen Verfahrens von besonderem Interesse sind Verbindungen der Formel I, worin x 1 oder 2 ist und B
eine Gruppe der Formel 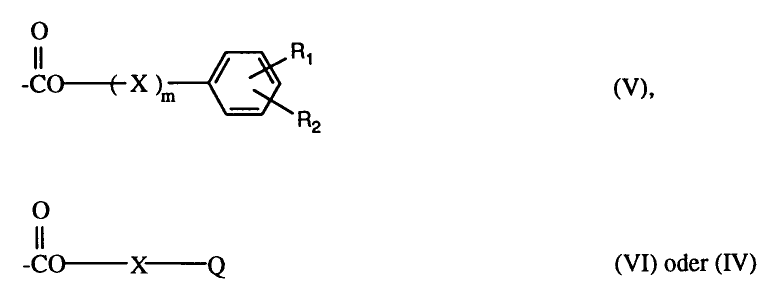 ist, und, wenn x 2 bedeutet, auch einmal Wasserstoff sein kann, wobei in den Formeln IV, V und VI
m Null oder 1 bedeutet,
X C₁-C₄-Alkylen oder C₂-C₅-Alkenylen ist,
R₁ und R₂ unabhängig voneinander Wasserstoff, C₁-C₄-Alkyl, Methoxy, Chlor oder NO₂ bedeuten, und
Q Wasserstoff, CN, CCl₃, eine Gruppe 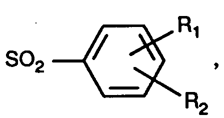 SO₂CH₃ oder SCH₃,
R₃ und R₄ unabhängig voneinander Wasserstoff, C₁-C₄-Alkyl oder eine Gruppe 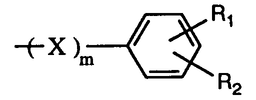 bedeuten,
oder R₃ und R₄ zusammen einen Piperidinylrest bilden,
und insbesondere jene, worin x 2 ist und B zweimal eine Gruppe der Formel 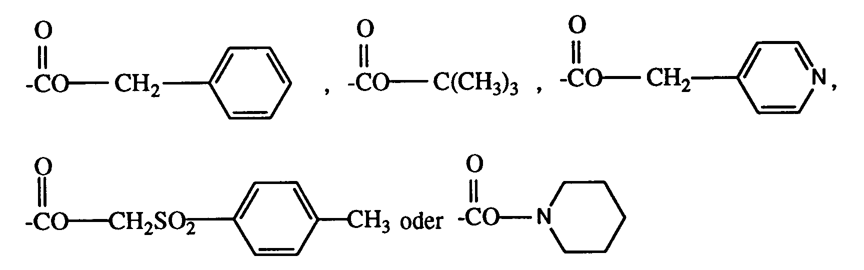 bedeutet.

Bevorzugte Verbindungen der Formel I sind
a) Perylencarbonsäureimide der Formel 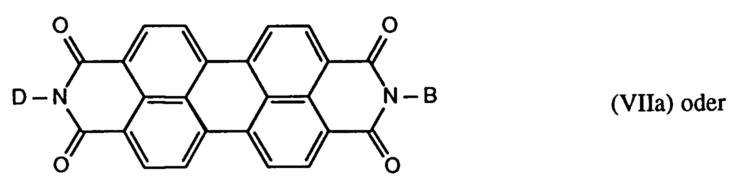 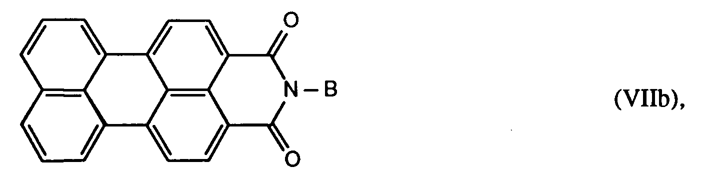 worin D Wasserstoff, C₁-C₆-Alkyl, unsubstituiertes oder durch Halogen oder C₁-C₄-Alkyl substituiertes Phenyl, Benzyl oder Phenethyl oder B bedeutet,
b) Chinacridone der Formel 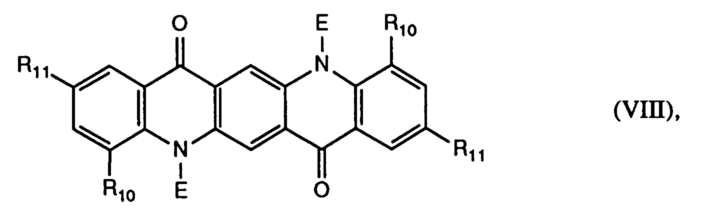 worin R₁₀ und R₁₁ unabhängig voneinander Wasserstoff, Halogen, C₁-C₁₈-Alkyl, C₁-C₄-Alkoxy oder Phenyl ist,
c) Dioxazine der Formel 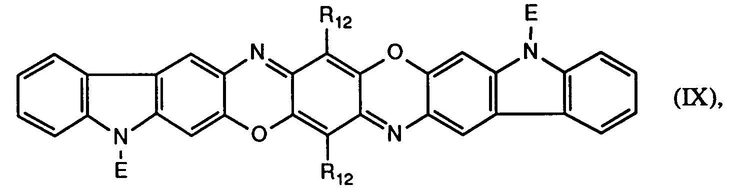 worin R₁₂ Wasserstoff, Halogen oder C₁-C₁₈-Alkyl ist,
d) Isoindoline der Formeln 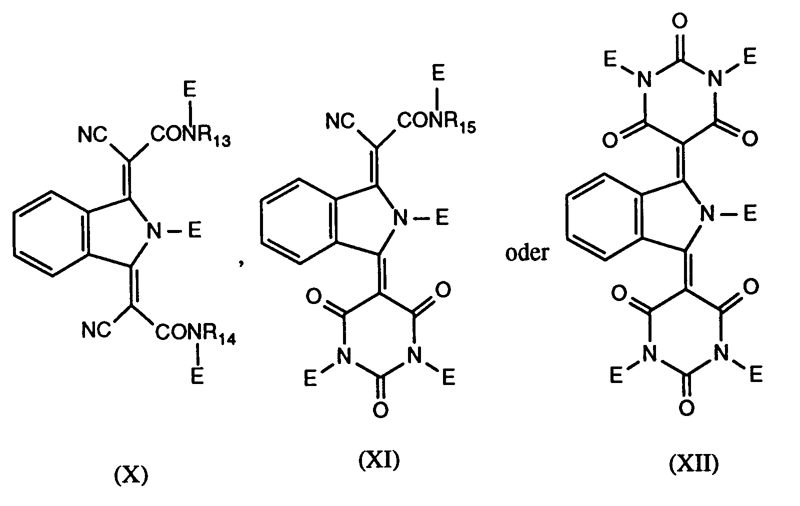 worin R₁₃ eine Gruppe 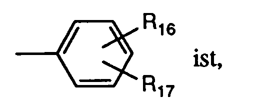 R₁₄ Wasserstoff, C₁-C₁₈-Aklyl, Benzyl oder eine Gruppe 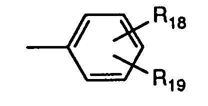 bedeutet
   R₁₅ die gleiche Bedeutung wie R₁₃ hat,
   R₁₆, R₁₇, R₁₈ und R₁₉ unabhängig voneinander Wasserstoff, C₁-C₁₈-Alkyl, C₁-C₄-Alkoxy, Halogen oder Trifluormethyl bedeuten,
e) Indigoderivat der Formel 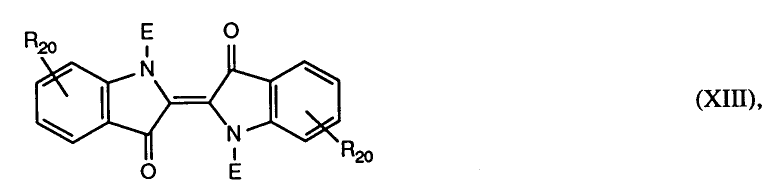 worin R₂₀ Wasserstoff, CN, C₁-C₄-Alkyl, C₁-C₄-Alkoxy oder Halogen bedeutet,
f) Benzimidazolon-Azoverbindungen der Formel 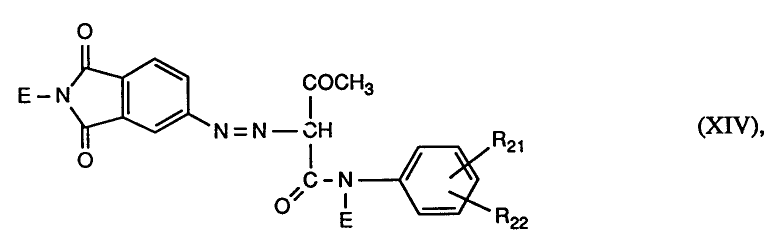 worin R₂₁ und R₂₂ unabhängig voneinander Wasserstoff, Halogen, C₁-C₄-Alkyl oder C₁-C₄-Alkoxy sind,
g) anthrachinoide Verbindungen der Formel 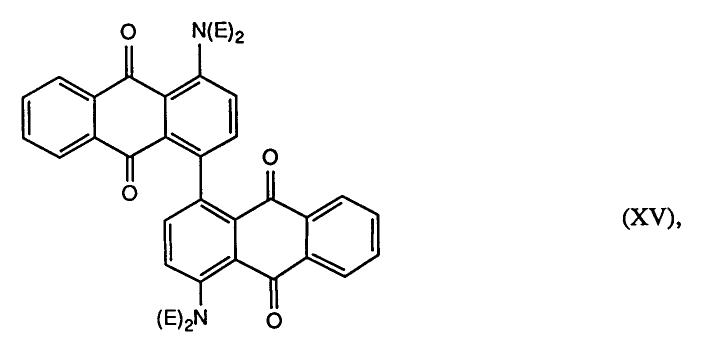
h) Phthalocyanine der Formel 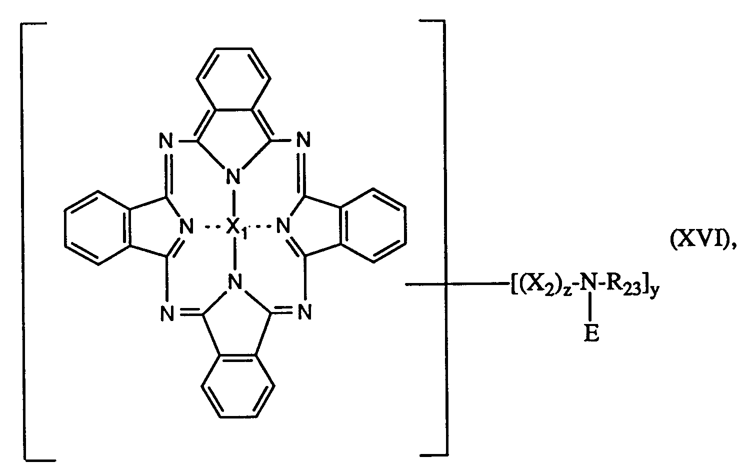 worin
   X₁ H₂, Zn, Cu, Ni, Fe oder V,
   X₂ -CH(R₂₄)- oder -SO₂-
   R₂₃ Wasserstoff, C₁-C₄-Alkyl, -N(E)R₂₄, -NHCOR₂₅, -COR₂₅ oder 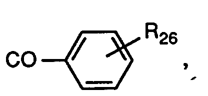 R₂₄ Wasserstoff oder C₁-C₄-Alkyl, R₂₅ C₁-C₄-Alkyl und R₂₆ Wasserstoff, Halogen,
   C₁-C₄-Alkyl oder C₁-C₄-Alkoxy bedeuten,
   z für Null oder 1 und y für eine Zahl von 1 bis 4 stehen,
   und
i) Pyrrolo[3,4-c]pyrrole der Formel 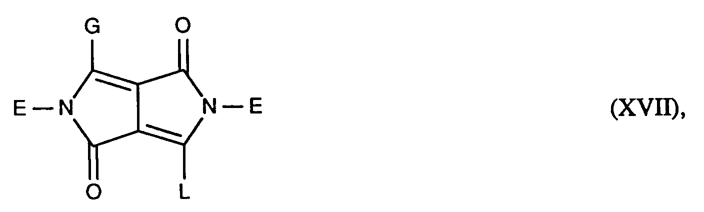 worin G und L unabhängig voneinander für eine Gruppe der Formel 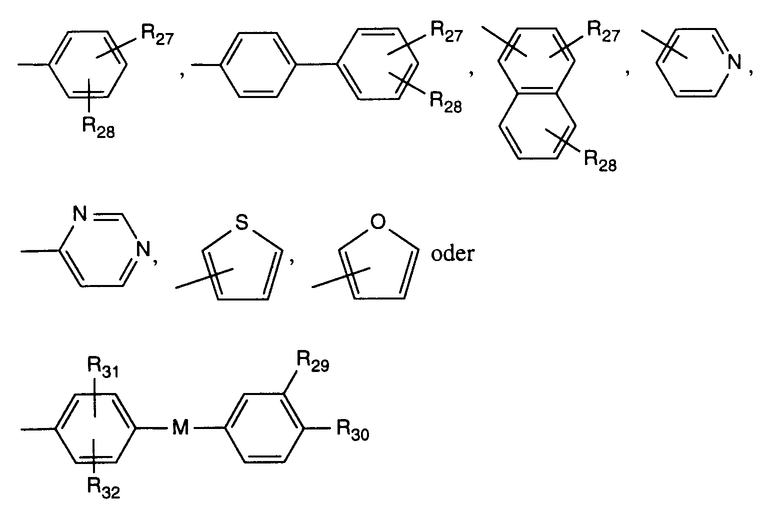 stehen, worin
   R₂₇ und R₂₈ unabhängig voneinander Wasserstoff, Halogen, C₁-C₁₈-Alkyl, C₁-C₁₈-Alkoxy, C₁-C₁₈-Alkylmercapto, C₁-C₁₈-Alkylamino, -CN, -NO₂, -Phenyl, Trifluormethyl, C₅-C₆-Cycloalkyl, C=N-(C₁-C₁₈-Alkyl), 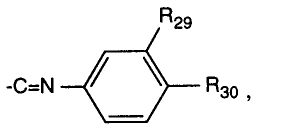 Imidazolyl, Pyrrazolyl, Triazolyl, Piperazinyl, Pyrrolyl, Oxazolyl, Benzoxazolyl, Benzthiazolyl, Benzimidazolyl, Morpholinyl, Piperidinyl oder Pyrrolidinyl bedeuten, M -CH₂-, -CH(CH₃)-, -C(CH₃)₂-, -CH=N-, -N=N-, -O-, -S-, -SO-, -SO₂-oder -NR₃₃- ist, R₂₉ und R₃₀ unabhängig voneinander Wasserstoff, Halogen, C₁-C₆-Alkyl, C₁-C₁₈ Alkoxy oder -CN sind, R₃₁ und R₃₂ unabhängig voneinander Wasserstoff, Halogen oder C₁-C₆-Alkyl und R₃₃ Wasserstoff oder C₁-C₆-Alkyl bedeuten,
   wobei in den obenerwähnten Formeln E jeweils Wasserstoff oder B bedeutet, mit der Massgabe, dass E in jeder Formel mindestens einmal B ist, und B die oben angegebene Bedeutung hat, für welche die obenerwähnten Bevorzugungen gelten.

Für R₂₇ und R₂₈ in Formel XVII stehen C₁-C₁₈-Alkylmercapto beispielsweise für Methylmercapto, Ethylmercapto, Propylmercapto, Butylmercapto, Octylmercapto, Decylmercapto, Hexadecylmercapto oder Octadecylmercapto und C₁-C₁₈-Alkylamino z.B. für Methylamino, Ethylamino, Propylamino, Hexylamino, Decylamino, Hexadecylamino oder Octadecylamino.

Besonders bevorzugt ist die Verwendung von Chinacridonen der Formel VIII, worin R₁₀ und R₁₁ unabhängig voneinander Wasserstoff, Chlor oder Methyl bedeuten und E die oben angegebene Bedeutung hat, und/oder
Pyrrolo[3,4-c]pyrrolen der Formel XVII, worin G und L gleich sind und eine Gruppe der Formel 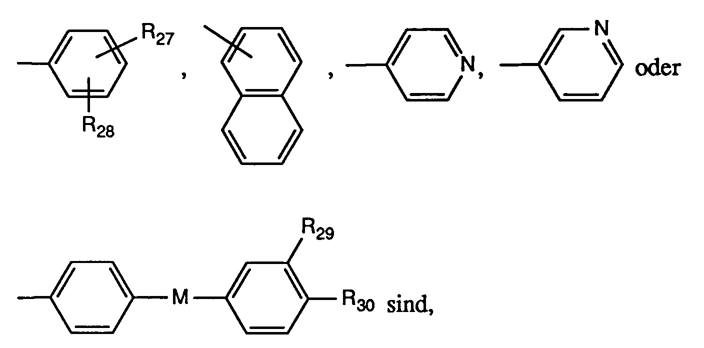 worin R₂₇ und R₂₈ unabhängig voneinander Wasserstoff, Chlor, Brom, C₁-C₄-Alkyl, C₁-C₆-Alkoxy, C₁-C₆-Alkylamino, CN oder Phenyl bedeuten,
M -O-, -NR₃₃-, -N=N- oder -SO₂- ist,
R₂₉ und R₃₀ Wasserstoff und R₃₃ Wasserstoff, Methyl oder Ethyl bedeuten und E die oben angegebene Bedeutung hat.

Ganz besonders bevorzugt ist die Verwendung von Chinacridonen der Formeln 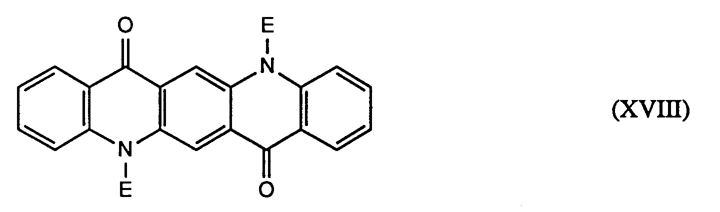 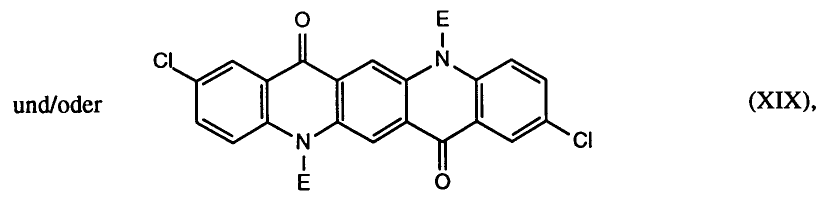 und/oder Pyrrolo[3,4-c]pyrrolen der Formel 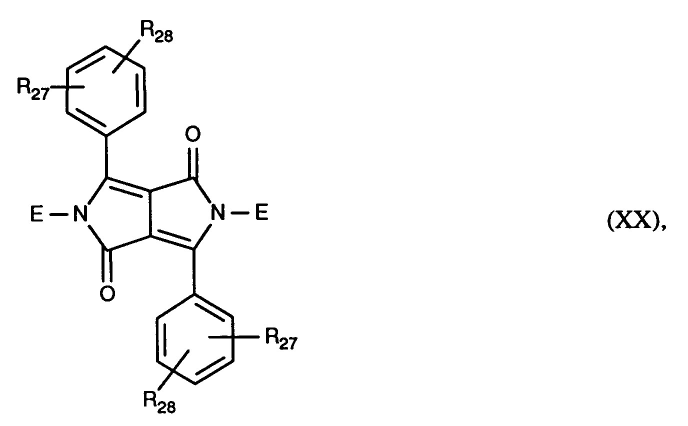 worin R₂₇ und R₂₈ unabhängig voneinander Wasserstoff, Methyl, tert.-Butyl, Chlor, Brom, CN oder Phenyl bedeuten,
wobei E in den Formeln XVIII, XIX und XX eine Gruppe der Formel 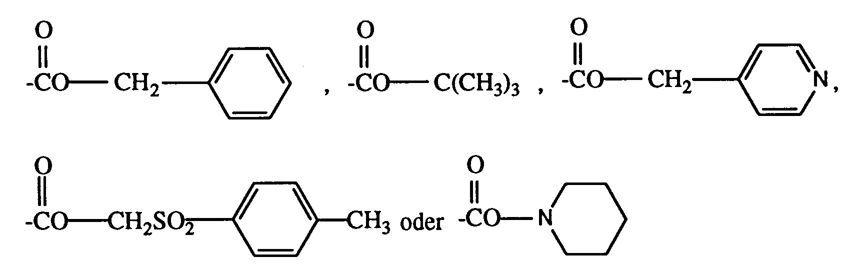 bedeutet.

Die Verbindungen der Formel I können in Analogie zu an sich bekannten Methoden hergestellt werden, z.B. dadurch, dass eine Verbindung der Formel

A(H)ₓ, (XXI)

worin A und x die oben angegebene Bedeutung haben, im gewünschten Molverhältnis mit einem Dicarbonat der Formel

B-O-B (XXII)

oder mit einem Trihaloessigsäureester der Formel

(R₃₄)₃C-B (XXII),

oder mit einem Azid der Formel

BN₃ (XXIV),

oder mit einem Carbonat der Formel

B-OR₃₅ (XXV),

oder mit einem Alkylideniminooxyameisensäureester der Formel 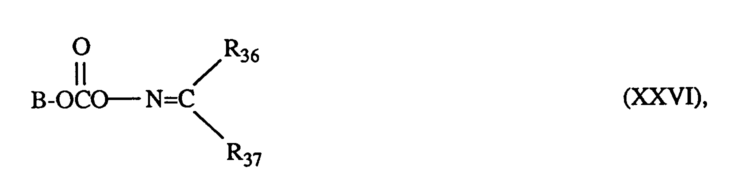 worin B jeweils die oben angegebene Bedeutung hat, R₃₄ Chlor, Fluor oder Brom, R₃₅ C₁-C₄-Alkyl oder unsubstituiertes oder durch Halogen, C₁-C₄-Alkyl, C₁-C₄-Alkoxy oder -CN substituiertes Phenyl, R₃₆ -CN oder -COOR₃₅ und R₃₇ unsubstituiertes oder durch Halogen, C₁-C₄-Alkyl, C₁-C₄-Alkoxy oder -CN substituiertes Phenyl bedeuten, in einem aprotischen organischen Lösungsmittel in Gegenwart einer Base als Katalysator, zweckmässig bei Temperaturen zwischen 0 und 400°C, bevorzugt zwischen 10 und 200°C, während 2 bis 80 Stunden, umgesetzt wird.

Bevorzugt wird die Verbindung der Formel XXI mit einem Dicarbonat der Formel XVII umgesetzt.

Die Verbindungen der Formel XXI, Dicarbonate der Formel XXII, Trihaloessigsäureester der Formel XXIII, Azide der Formel XXIV, Carbonate der Formel XXV und Alkylideniminooxyameisensäureester der Formel XXVI sind bekannte Substanzen. Sollten einige noch neu sein, so können sie in Analogie zu allgemein bekannten Methoden hergestellt werden.

Das jeweilige Molverhältnis zwischen der Verbindung der Formel XXI und den Verbindungen der Formeln XXII - XXVI richtet sich nach x, d.h. nach der Zahl der einzuführenden Resten B. Zweckmässig werden die Verbindungen der Formeln XXII - XXVI allerdings im 2-bis 10-fachem Ueberschuss eingesetzt.

Geeignete aprotische organische Lösungsmittel sind beispielsweise Ether, wie Tetrahydrofuran oder Dioxan, oder Glykoläther, wie Ethylenglykol-methyläther, Ethylenglykolethylether, Diethylenglykol-monomethylether oder Diethylenglykol-monoethylether, ferner dipolar-aprotische Lösungsmittel, wie Acetonitril, Benzonitril, N,N-Dimethylformamid, N,N-Dimethylacetamid, Nitrobenzol, N-Methylpyrrolidon, halogenierte aliphatische oder aromatische Kohlenwasserstoffe, wie Trichlorethan, Benzol oder durch Alkyl, Alkoxy oder Halogen substituiertes Benzol, wie Toluol, Xylol, Anisol oder Chlorbenzol oder aromatische N-Heterocyclen, wie Pyridin, Picolin oder Chinolin. Bevorzugte Lösungsmittel sind z.B. Tetrahydrofuran, N,N-Dimethylformamid, N-Methylpyrrolidon. Die genannten Lösungsmittel können auch als Mischungen eingesetzt werden. Zweckmässigerweise verwendet man 5-20 Gew.-Teile Lösungsmittel auf 1 Gew.-Teil der Reaktionsteilnehmer.

Als Katalysator geeignete Basen sind beispielsweise die Alkalimetalle selbst, wie Lithium-, Natrium- oder Kalium sowie deren Hydroxide und Carbonate, oder Alkaliamide, wie Lithium-, Natrium- oder Kaliumamid oder Alkalihydride, wie Lithium-, Natrium- oder Kaliumhydrid, oder Erdalkali- oder Alkalialkoholate, die sich insbesondere von primären, sekundären oder tertiären aliphatischen Alkoholen mit 1 bis 10 C-Atomen ableiten, wie z.B. Lithium-, Natrium- oder Kaliummethylat, -ethylat, -n-propylat, -isopropylat, n-butylat, -sek.-butylat, tert.-butylat, -2-methyl-2-butylat, -2-methyl-2-pentylat, -3-methyl-3-pentylat, -3-ethyl-3-pentylat, und ferner organische aliphatische, aromatische oder heterocyclische N-Basen, darunter z.B. Diazabicycloocten, Diazabicycloundecen und 4-Dimethylaminopyridin und Trialkylamine, wie z.B. Trimethyl- oder Triethylamin. Man kann aber auch ein Gemisch der genannten Basen verwenden.

Bevorzugt werden die organischen N-Basen, wie z.B. Diazabicycloocten, Diazabicycloundecen und insbesondere 4-Dimethylaminopyridin.

Die Umsetzung wird bevorzugt bei Temperaturen zwischen 10 und 100°C, insbesondere zwischen 14 und 40°C, durchgeführt und zwar bei atomsphärischem Druck.

Zur Durchführung des erfindungsgemässen Verfahrens werden die Verbindungen der Formel I entweder nach allgemein bekannten Methoden in Pulverform im gewünschten Verhältnis vermischt und das Gemisch wird im Lösungsmittel gelöst, oder sie werden zuerst einzeln im Lösungsmittel gelöst und die Lösungen im gewünschten Verhältnis vermischt.

Es können zweckmässig folgende Lösungsmittel eingesetzt werden: Ether, wie Tetrahydrofuran oder Dioxan, oder Glykoläther, wie Ethylenglykol-methyläther, Ethylenglykol-ethylether, Diethylenglykol-monomethylether oder Diethylenglykol-monoethylether, Polyalkohole, wie Polyethylenglykol, Ketone, wie Aceton, Ethylmethylketon, Isobutylmethylketon oder Cyclohexanon, ferner dipolar-aprotische Lösungsmittel, wie Acetonitril, Benzonitril, N,N-Dimethylformamid, N,N-Dimethylacetamid, Nitrobenzol, N-Methylpyrrolidon, Dimethylsulfoxyd, halogenierte aliphatische oder aromatische Kohlenwasserstoffe, wie Trichlorethan, Dichlormethan, Chloroform, Benzol oder durch Alkyl, Alkoxy oder Halogen substituiertes Benzol, wie Toluol, Xylol, Anisol oder Chlorbenzol, aromatische N-Heterocyclen, wie Pyridin, Picolin oder Chinolin oder hochsiedende Lösungsmittel, wie Decalin, n-Dodecan oder Kerosin oder Gemische derselben. Bevorzugte Lösungsmittel sind z.B. Toluol, Diphenylether, N-Methylpyrrolidon, N,N-Dimethylformamid, Dimethylsulfoxyd und Chinolin.

Die Konzentration der Verbindungen der Formel I im Lösungsmittel oder Lösungsmittelsystem kann je nach Lösungsmittel stark variieren. Zweckmässig setzt man 0,1 bis 20 Gew.% Verbindung der Formel I, bezogen auf die gesamte Lösung und vorzugsweise 0,2 bis 5 Gew.% ein.

Aus der Lösung kann das Pigmentgemisch bestehend aus den den Verbindungen der Formel I zugrundeliegenden Pigmenten auf einfachste Weise ausgefällt werden, sei es durch a) thermische, d.h. z.B. durch Aufheizen auf Temperaturen zwischen 50 und 400°C, bevorzugt zwischen 100 und 200°C oder Laserbestrahlung, oder chemische, d.h. z.B. mit b) organischen oder anorganischen Säuren, wie beispielsweise Essig-, Tosyl-, Trifluoressig-, Salz- oder Schwefelsäure, Behandlung des gelösten Gemisches und Isolierung des ausgefallenen Produktes nach üblichen Methoden.

Da die Verbindungen der Formel I im allgemeinen in den zu färbenden hochmolekularen organischen Materialien löslich sind, können letztere auch als Lösungsmittel verwendet werden. So können auch mindestens zwei verschiedene Verbindungen der Formel I, entweder einzeln oder vermischt, in das zu färbende hochmolekulare organische Material, d.h. z.B. in Kunststoffen, Lacksysteme oder Druckfarbensysteme nach üblichen Methoden eingearbeitet und gelöst werden und in situ, mittels einer der obenerwähnten Methoden das Pigmentgemisch ausgefällt werden.

Das Verhältnis zwischen den das Gemisch bildenden Verbindungen der Formel I kann sehr stark variieren und ist auch vom gewünschten Farbton abhängig. Bei Zweiergemischen beträgt das Verhältnis zwischen den beiden Komponenten zweckmässig 50-95:5-50, bevorzugt 65-90:10-35 Gew.%.

Die nach dem erfindungsgemässen Verfahren erhaltenen Pigmentgemische zeichnen sich sowohl, wenn sie aus der Lösung isoliert und nachträglich ins zu färbende Material eingearbeitet werden, als auch wenn sie in situ, d.h. im Substrat ausgefällt werden, durch ganz hervorragende und gegenüber konventionell hergestellten Gemischen insgesamt verbesserten Eigenschaften, sei es koloristisch, wie z.B. Farbton, Reinheit des Farbtons, Farbstärke, Brillanz und Transparenz aber auch bezüglich Beständigkeit, wie z.B. Licht-, Wetter-, Migrations- und Hitzebeständigkeit aus.

Bei geeigneter Wahl der Komponenten und der Mischungsverhältnisse können auch feste Lösungen entstehen, insbesondere wenn Komponenten und Mischverhältnisse gewählt werden, die nach konventionellen Methoden bekannter Weise feste Lösungen bilden. Das erfindungsgemässe Verfahren kann aber auch in Fällen, wo nach konventionellen Methoden keine feste Lösungen entstehen, zur Bildung von festen Lösungen führen.

Feste Lösungen können durch ihr Röntgenbeugungsspektrum gekennzeichnet werden, welches sich von demjenigen des physikalischen Gemisches der beiden Einzelkomponenten unterscheidet. Das Röntgenbeugungsdiagramm der erfindungsgemässen festen Lösungen ist durch andere Linien gekennzeichnet als die Summe der Röntgenbeugungsdiagramme der Einzelkomponenten.

### Die folgenden Beispiele erläutern die Erfindung:

Beispiel 1: a) Einer Mischung aus 14,75 g (0,0512 Mol) 1,4-Diketo-3,6-diphenyl-pyrrolo-[3,4-c]pyrrol und 3,23 g (0,0264 Mol) 4-Dimethylaminopyridin in 500 ml Tetrahydrofuran (über Molekularsieb getrocknet) werden in 3 Portionen im Abstand von einer Stunde 27,94 g (0,128 Mol) Di-tert.-butyl-dicarbonat zugegeben. Die erhaltene rote Suspension wird 2 Stunden bei Raumtemperatur unter Ausschluss von atmosphärischer Feuchtigkeit gerührt. Man erhält eine dunkelgrüne Lösung. Das Lösungsmittel wird bei vermindertem Druck abdestilliert. Der gelbe Rückstand wird mit einer 5 %igen wässrigen Natriumbicarbonatlösung gewaschen, mit Wasser ausgespült und im Vakuum getrocknet. Man erhält 24,5 g (98 % d.Th.) N,N'-Di-tert.-butoxycarbonyl-1,4-diketo-3,6-diphenylpyrrolo[3,4-c]-pyrrol

### Analyse:

¹H-NMR (CDCl₃): 7,75 (d, 4H); 7,48-7,50 (m, 6H); 1,40 (s, 18H).

b) Einer Mischung aus 8,44 g (0,021 Mol) 1,4-Diketo-3,6-di-(4-tert.-butylphenyl)-pyrrolo-[3,4-c]pyrrol und 1,49 g (0,012 Mol) 4-Dimethylaminopyridin in 100 ml N,N-Dimethylformamid (über Molekularsieb getrocknet) werden 24,29 g (0,111 Mol) Di-tert.-butyl-dicarbonat zugegeben. Die erhaltene rote Suspension wird 3 Stunden bei Raumtemperatur unter Ausschluss von atmosphärischer Feuchtigkeit gerührt. Es erfolgt ein Farbumschlag nach Orange. Die ausgefallene Substanz wird abfiltriert, der Rückstand wird wiederholt mit kaltem destilliertem Wasser gewaschen und im Vakuum bei Raumtemperatur getrocknet. Man erhält 11,40 g (90 % d.Th.) N,N'-Di-tert.-butoxycarbonyl-1,4-diketo-3,6-di-(4-tert.-butylphenyl)-pyrrolo[3,4-c]pyrrol als leuchtend gelbes Produkt.

### Analyse:

¹H-NMR (CDCl₃): 7,69 (d, 4H); 7,48 (d, 4H); 1,43 (s, 18H); 1,34 (s, 18H).

c) Eine Mischung von 1,77 g N,N'-Di-tert.-butoxycarbonyl-1,4-diketo-3,6-diphenyl-pyrrolo[3,4-c]pyrrol (a) und 0,38 g N,N'-Di-tert-butoxycarbonyl-1,4-diketo-3,6-di-(4-tert.-butylphenyl)-pyrrolo[3,4-c]pyrrol (b) wird in 100 ml Toluol bei Raumtemperatur gelöst. Die klare gelbe Lösung wird unter Rühren auf 60°C erhitzt dann werden 10 ml Trifluoressigsäure zugegeben, auf 90°C erhitzt, bei dieser Temperatur 20 Minuten gerührt und anschliessend auf Raumtemperatur abkühlen gelassen. Die gebildete purpurrote feste Substanz wird abfiltriert, zuerst mit Methanol, dann mit destilliertem Wasser gewaschen und im Vakuumtrockenschrank bei 70°C getrocknet. Man erhält 0,90 g (69,2 % d. Th.) eines Produktes dessen purpurrote Farbe sich von der Farbe beider ursprünglichen Komponenten und deren physikalischen Mischung unterscheidet. Dasselbe trifft für das Röntgenbeugungsspektrum, was als Nachweis für das Vorhandensein einer festen Lösung gilt.

Beispiel 2a): Verfährt man wie in Beispiel la beschrieben, mit der einzigen Ausnahme, dass man anstelle von 1,4-Diketo-3,6-diphenyl-pyrrolo[3,4-c]pyrrol die äquivalente Menge 1,4-Diketo-3,6-di(p-tolyl)-pyrrolo[3,4-c]pyrrol einsetzt, so erhält man mit 94 %iger Ausbeute N,N'-Di-tert.-butoxycarbonyl-1,4-diketo-3,6-di-(p-tolyl)-pyrrolo-[3,4-c]pyrrol.

### Analyse:

¹H-NMR(CDCl₃): 7,65 (d, 4H); 7,28 (d, 4H); 2,42 (s, 6H); 1,43 (s, 18H):

b) Verfährt man wie in Beispiel 1b beschrieben, mit der einzigen Ausnahme, dass man anstelle von 1,4-Diketo-3,6-di-(4-tert.-butylphenyl)-pyrrolo[3,4-c]pyrrol die äquivalente Menge 1,4-Diketo-3,6-di(m-tolyl)-pyrrolo[3,4-c]pyrrol einsetzt, so erhält man mit 92 %iger Ausbeute N,N'-Di-tert.-butoxycarbonyl-1,4-diketo-3,6-di-(m-tolyl)-pyrrolo-[3,4-c]pyrrol.

### Analyse:

¹H-NMR(CDCl₃): 7,54-7,57 (m, 4H); 7,29-7,39 (m, 4H); 2,41(s, 6H); 1,39 (s, 18H);

c) Eine Mischung von 0,85 g N,N'-Di-tert.-butoxycarbonyl-1,4-diketo-3,6-di-(p-tolyl)-pyrrolo[3,4-c]pyrrol (a) und 0,15 g N,N'-Di-tert-butoxycarbonyl-1,4-diketo-3,6-di-(m-tolyl)-pyrrolo[3,4-c]pyrrol (b) in 500 ml Diphenylether wird 1 Stunde bei 40°C gerührt, dann wird sie tropfweise, unter starkem Rühren, in 20 ml auf 220°C vorgeheiztem Diphenylether eingeführt. Die sich bildende rote Suspension wird 30 Minuten bei 220°C weitergerührt und dann auf 60°C abkühlen gelassen. Das ausgefallene Produkt wird abfiltriert, zuerst mit Methanol, dann mit destilliertem Wasser gewaschen und im Vakuumtrockenschrank getrocknet. Man erhält 0,55 g (98 % d. Th.) eines Produktes, dessen Röntgenbeugungsspektrum sich von jenem der ursprünglichen Komponenten unterscheidet und somit als Nachweis für das Vorhandensein einer festen Lösung gilt.

Beispiel 3a): Zu einer Mischung von 1,8 g (0,00576 Mol) Chinacridon und 0,3 g (0,00246 Mol) 4-Dimethylaminopyridin in 90 ml N,N-Dimethylformamid werden 6,0 g (0,0275 Mol) Di-tert.-butyl-dicarbonat gegeben. Die erhaltene violette Suspension wird über Nacht bei Raumtemperatur unter Ausschluss von atmosphärischer Feuchtigkeit gerührt. Die Farbe schlägt dabei auf gelborange um. Danach wird die Reaktionsmischung unter Rühren in 100 ml destilliertem Wasser gegossen. Der gelbe Niederschlag wird abfiltriert und der Rückstand mit destilliertem Wasser gewaschen und getrocknet. Man erhält 2,8 g (95 %d. Th.) N,N'-Di-tert.-butoxycarbonylchinacridon.

### Analyse:

¹H-NMR(CDCl₃): 8,74 (s, 2H); 8,41 (d, 2H); 7,84 (d, 2H); 7,72 (t, 2H); 7,38 (t, 2H); 1,75 (s 18H).

b) Eine Mischung von 0,26 g N,N'-Di-tert.-butoxycarbonyl-1,4-diketo-3,6-diphenyl-pyrrolo[3,4-c]pyrrol (hergestellt gemäss Beispiel 1a) und 2,50 g N,N'-Di-tert.-butoxy-carbonyl-chinacridon (a) in 100 ml Toluol wird unter Rühren auf 80°C geheizt. Unter starkem Rühren werden dann 2,58 g Toluol-4-Sulfonsäurehydrat zugegeben, es wird weiter erhitzt und 1 Stunde bei 105°C gerührt. Danach wird die rote Suspension auf Raumtemperatur abgekühlt und abfiltriert. Der rote Rückstand wird zuerst mit Methanol, dann mit destilliertem Wasser gewaschen und unter Vakuum bei 60°C getrocknet. Man erhält 1,68 g eines Produktes dessen Röntgenbeugungspektrum mit demjenigen des α-Chinacridons identisch ist und somit das Vorhandensein einer festen Lösung von DPP in Chinacridon belegt.

### Beispiel 4-11:

Wiederholt man das Beispiel 1 mit der einzigen Ausnahme, dass man in a) und b) anstelle von Di-tert.-butyl-dicarbonat ein Dicarbonat der Formel B-O-B eingesetzt, in welchem B jeweils die in der nachstehenden Tabelle angegebenen Bedeutung hat, so erhält man stets ein Produkt, das mit dem von Beispiel 1 praktisch identisch ist.

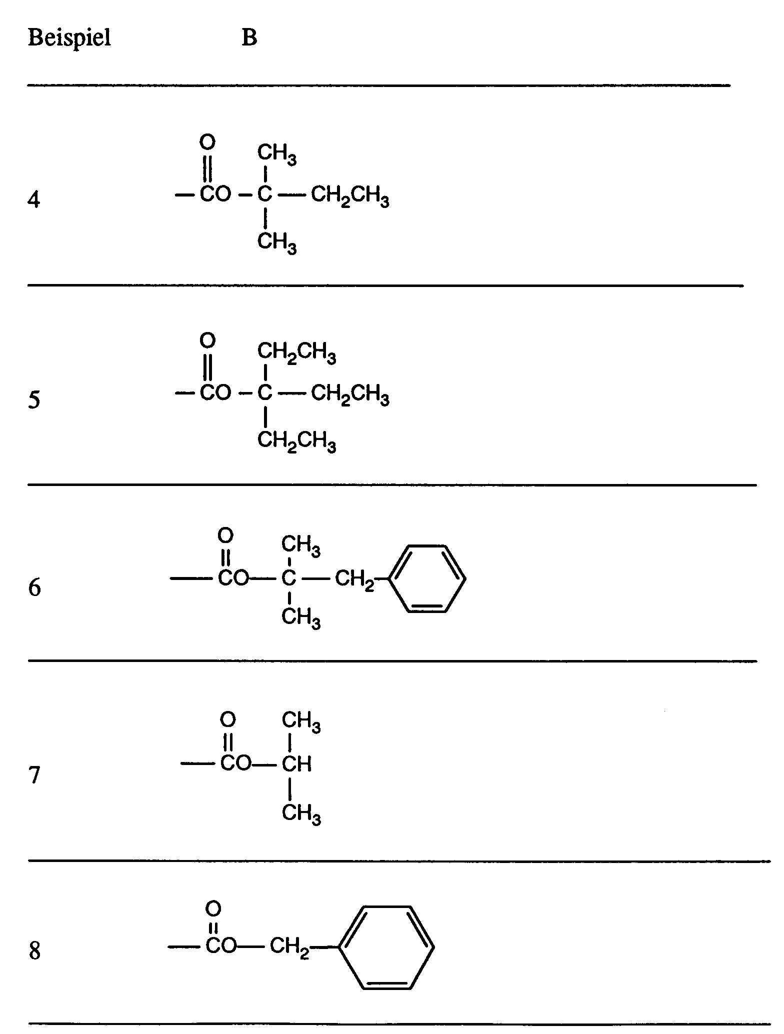

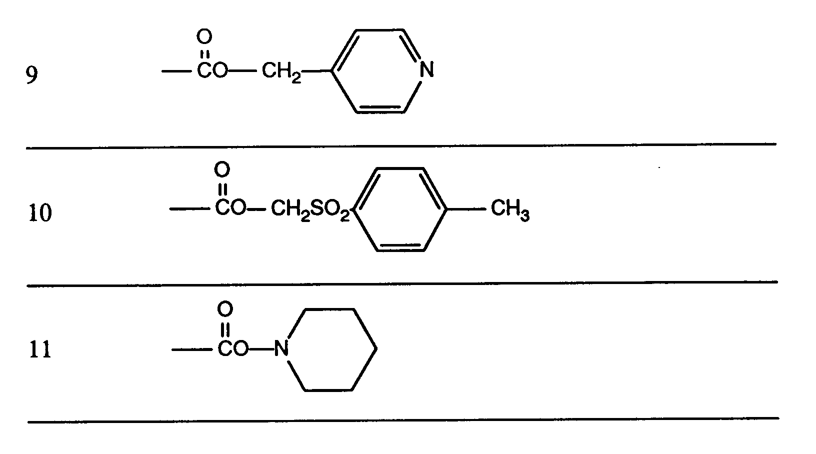

## Patentansprüche

1. Verfahren zur Herstellung synergistischer Pigmentgemische aus mindestens zwei verschiedenen Pigmenten der Chinacridon-, Anthrachinon-, Perylen-, Indigo-, Chinophthalon-, Isoindolinon-, Isoindolin-, Dioxazin-, Phthalocyanin-, Diketopyrrolo-pyrrol-oder Azoreihe, dadurch gekennzeichnet, dass man mindestens zwei Verbindungen der Formel
A(B)ₓ, (I),
worin x eine ganze Zahl zwischen 1 und 4 bedeutet,
A für den Rest eines Farbstoffes der Chinacridon-, Anthrachinon-, Perylen-, Indigo-, Chinophthalon-, Isoindolinon-, Isoindolin-, Dioxazin-, Phthalocyanin-, Diketopyrrolopyrrol- oder Azoreihe steht, der x mit B verbundene N-Atome enthält,
B eine Gruppe der Formel 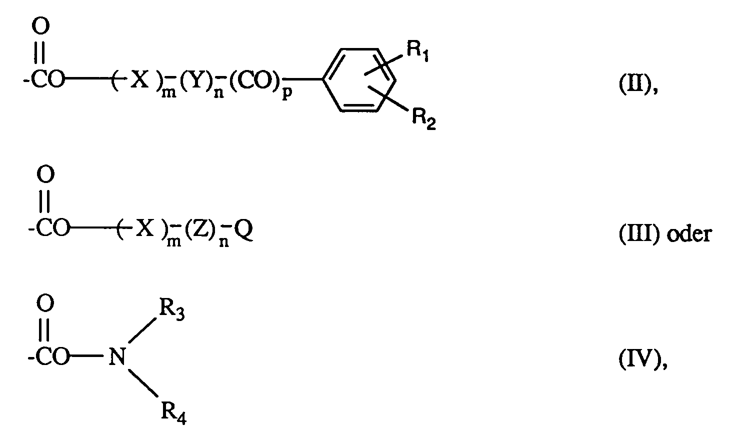 ist, und, wenn x 2, 3 oder 4 bedeutet, auch ein-, zwei- oder dreimal Wasserstoff sein kann, wobei in den Formeln II, III und IV
m, n und p unabhängig voneinander Null oder 1 sind,
X C₁-C₁₄-Alkylen oder C₂-C₈-Alkenylen
Y eine Gruppe -V-(CH₂)_{q}-,
Z eine Gruppe -V-(CH₂)ᵣ-,
V C₃-C₆-Cycloalkylen,
q eine Zahl von 1 bis 6 und
r eine Zahl von Null bis 6 bedeuten,
R₁ und R₂ unabhängig voneinander Wasserstoff, C₁-C₆-Alkyl, C₁-C₄-Alkoxy, Halogen, CN, NO₂, unsubstituiertes oder durch C₁-C₄-Alkyl, C₁-C₄-Alkoxy oder Halogen substituiertes Phenyl oder Phenoxy sind,
Q Wasserstoff, CN, Si(R₁)₃,
eine Gruppe C(R₅)(R₆)(R₇),
worin R₅, R₆ und R₇ unabhängig voneinander Wasserstoff oder Halogen sind und mindestens einer der Reste R₅, R₆ und R₇ Halogen bedeutet,
eine Gruppe 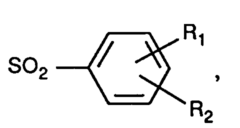 worin R₁ und R₂ die oben angegebene Bedeutung haben,
eine Gruppe SO₂R₈ oder SR₈, worin R₈ C₁-C₄-Alkyl ist,
eine Gruppe CH(R₉)₂, worin R₉ unsubstituiertes oder durch C₁-C₄-Alkyl, C₁-C₄-Alkoxy oder Halogen substituiertes Phenyl bedeutet,
oder
eine Gruppe der Formel 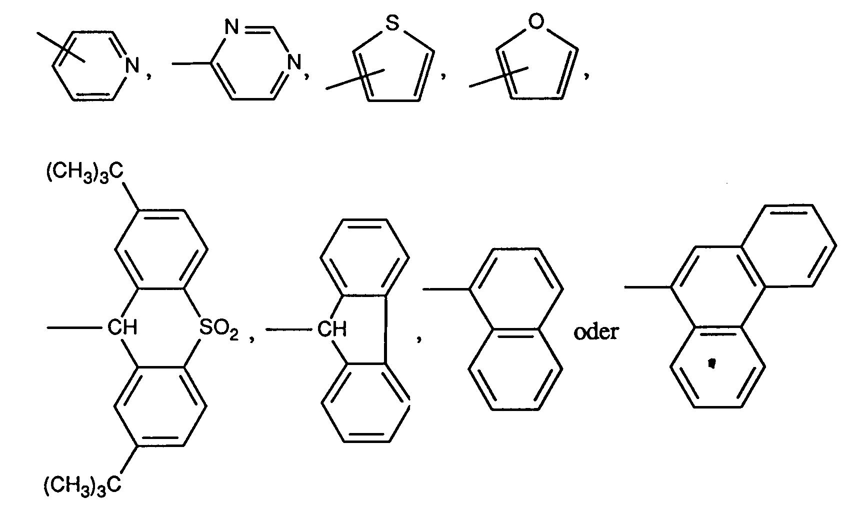 bedeutet,
R₃ und R₄ unabhängig voneinander Wasserstoff, C₁-C₁₈-Alkyl eine Gruppe 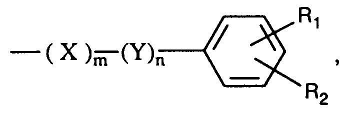 worin X, Y, R₁, R₂, m und n die oben angegebene Bedeutung haben, oder R₃ und R₄ zusammen mit dem Stickstoffatom an dem sie gebunden sind einen Pyrrolidinyl-, Piperidinyl- oder Morpholinylrest bilden,
in Pulverform nach üblichen Methoden vermischt und in einem organischen Lösungsmittel löst oder zuerst einzeln löst und die Lösungen vermischt und danach durch thermische oder chemische Behandlung das Pigmentgemisch bestehend aus den entsprechenden Pigmenten der Formel
A(H)ₓ,
worin A und x die oben angegebene Bedeutung haben, aus dem gelösten Gemisch ausfällt.

2. Verfahren gemäss Anspruch 1, gekennzeichnet durch die Verwendung zweier verschiedener Verbindungen der Formel I, worin x 1 oder 2 ist und B
eine Gruppe der Formel 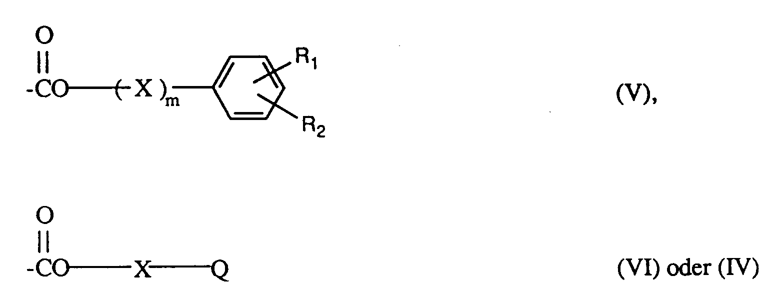 ist, und, wenn x 2 bedeutet, auch einmal Wasserstoff sein kann, wobei in den Formeln IV, V und VI
m Null oder 1 bedeutet,
X C₁-C₄-Alkylen oder C₂-C₅-Alkenylen ist,
R₁ und R₂ unabhängig voneinander Wasserstoff, C₁-C₄-Alkyl, Methoxy, Chlor oder NO₂ bedeuten, und
Q Wasserstoff, CN, CCl₃, eine Gruppe 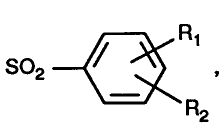 SO₂CH₃ oder SCH₃,
R₃ und R₄ unabhängig voneinander Wasserstoff, C₁-C₄-Alkyl oder eine Gruppe 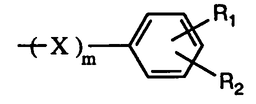 bedeuten,
oder R₃ und R₄ zusammen einen Piperidinylrest bilden,

3. Verfahren gemäss Anspruch 1, gekennzeichnet durch die Verwendung zweier verschiedener Verbindungen der Formel I, worin x 2 ist und B zweimal eine Gruppe der Formel 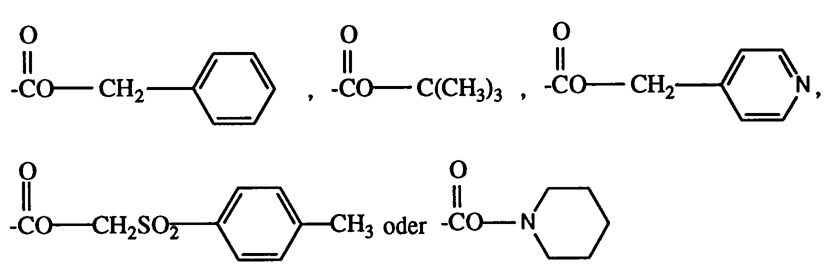 bedeutet.

4. Verfahren gemäss Anspruch 1, gekennzeichnet durch die Verwendung zweier verschiedener Verbindungen ausgewählt aus
a) Perylencarbonsäureimiden der Formel 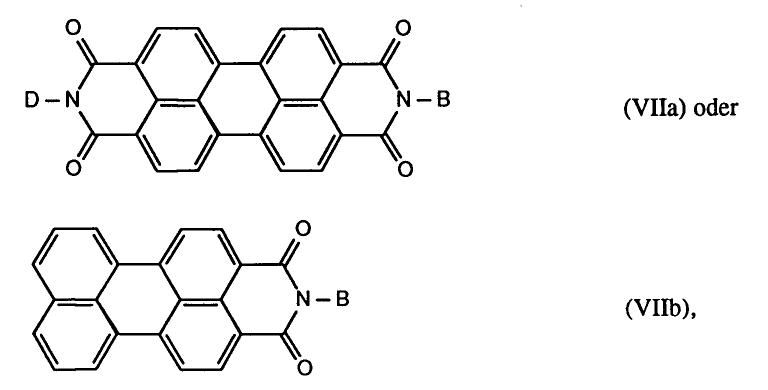 worin D Wasserstoff, C₁-C₆-Alkyl, unsubstituiertes oder durch Halogen oder C₁-C₄-Alkyl substituiertes Phenyl, Benzyl oder Phenethyl oder B bedeutet,
b) Chinacridonen der Formel 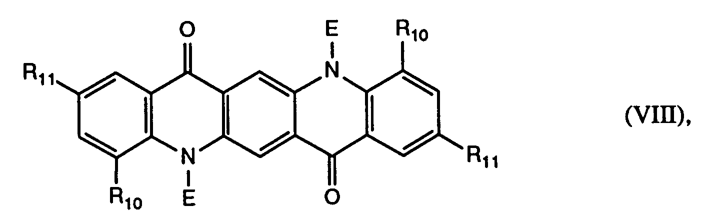 worin R₁₀ und R₁₁ unabhängig voneinander Wasserstoff, Halogen, C₁-C₁₈-Alkyl, C₁-C₄-Alkoxy oder Phenyl ist,
c) Dioxazinen der Formel 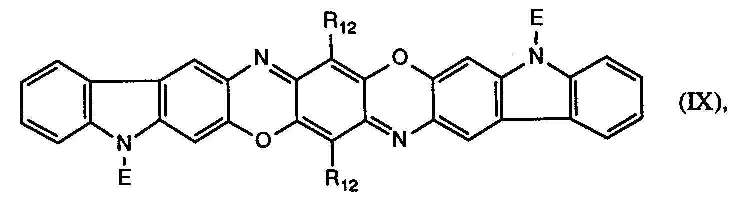 worin R₁₂ Wasserstoff, Halogen oder C₁-C₁₈-Alkyl ist,
d) Isoindolinen der Formeln 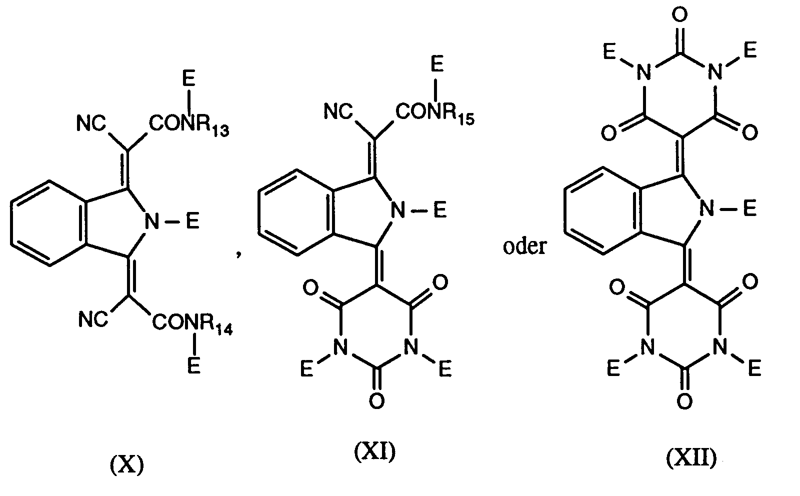 worin R₁₃ eine Gruppe 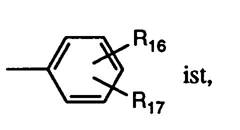 R₁₄ Wasserstoff, C₁-C₁₈-Akyl, Benzyl oder eine Gruppe 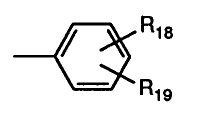 bedeutet
R₁₅ die gleiche Bedeutung wie R₁₃ hat,
R₁₆, R₁₇, R₁₈ und R₁₉ unabhängig voneinander Wasserstoff, C₁-C₁₈-Alkyl, C₁-C₄-Alkoxy, Halogen oder Trifluormethyl bedeuten,
e) Indigoderivaten der Formel 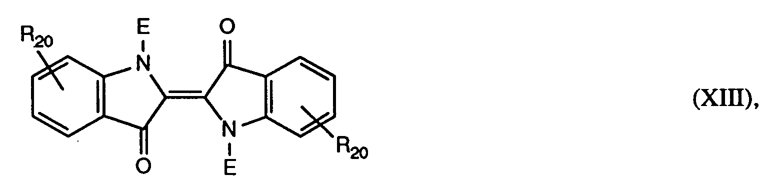 worin R₂₀ Wasserstoff, CN, C₁-C₄-Alkyl, C₁-C₄-Alkoxy oder Halogen bedeutet,
f) Benzimidazolon-Azoverbindungen der Formel 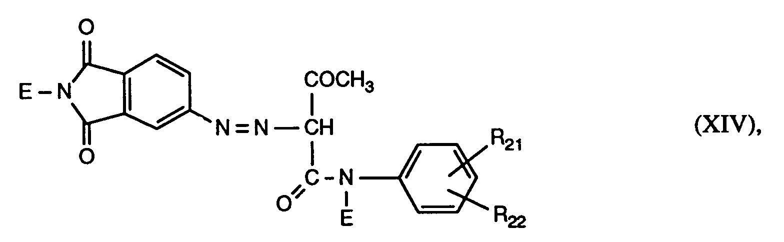 worin R₂₁ und R₂₂ unabhängig voneinander Wasserstoff, Halogen, C₁-C₄-Alkyl oder C₁-C₄-Alkoxy sind,
g) anthrachinoiden Verbindungen der Formel 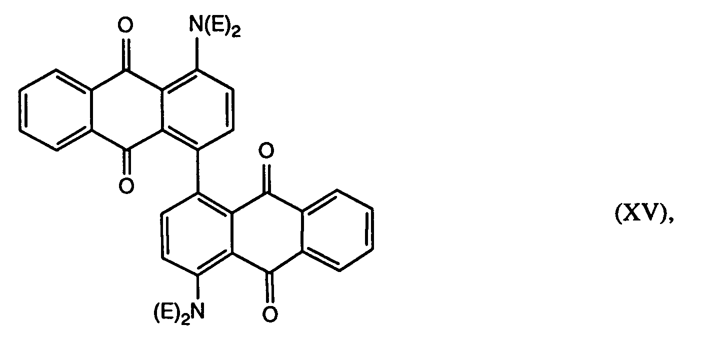
h) Phthalocyaninen der Formel 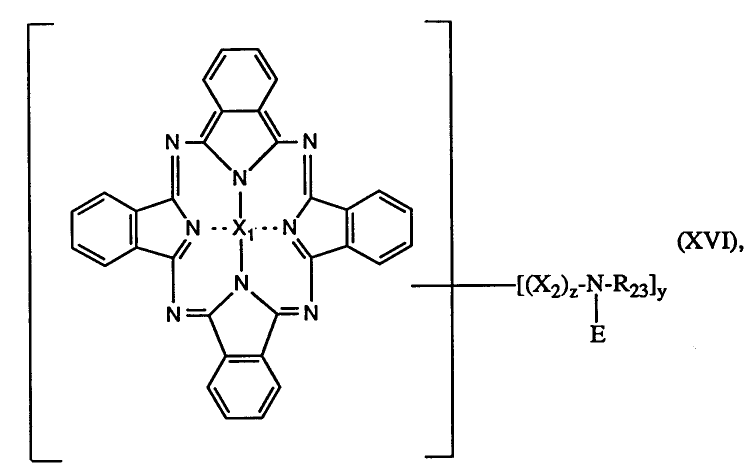 worin
X₁ H₂, Zn, Cu, Ni, Fe oder V,
X₂ -CH(R₂₄)- oder -SO₂-
R₂₃ Wasserstoff, C₁-C₄-Alkyl, -N(E)R₂₄, -NHCOR₂₅, -COR₂₅ oder 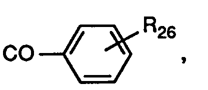 R₂₄ Wasserstoff oder C₁-C₄-Alkyl, R₂₅ C₁-C₄-Alkyl und R₂₆ Wasserstoff, Halogen, C₁-C₄-Alkyl oder C₁-C₄-Alkoxy bedeuten,
z für Null oder 1 und y für eine Zahl von 1 bis 4 stehen,
und
i) Pyrrolo[3,4-c]pyrrole der Formel 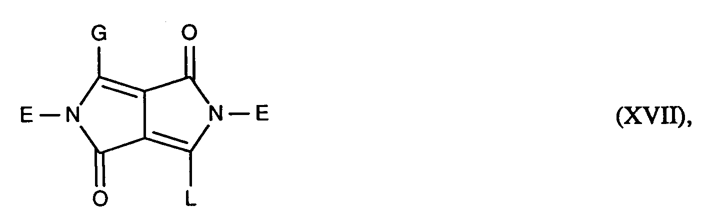 worin G und L unabhängig voneinander für eine Gruppe der Formel 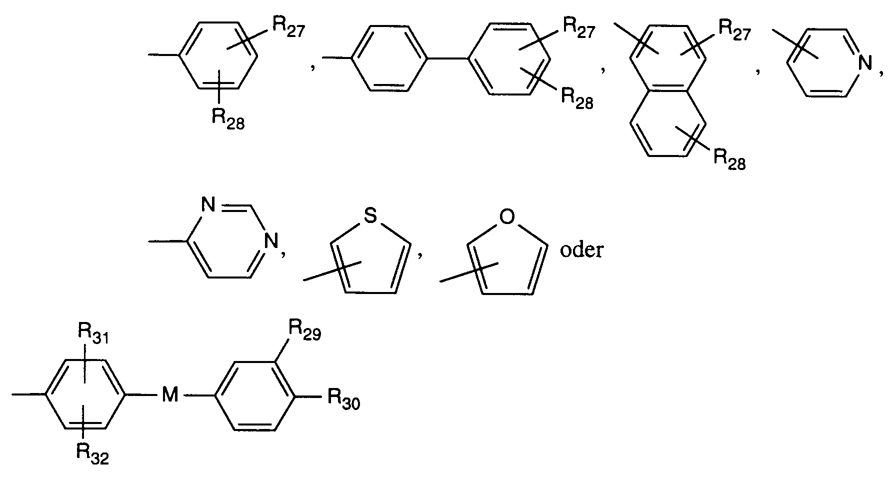 stehen, worin
R₂₇ und R₂₈ unabhängig voneinander Wasserstoff, Halogen, C₁-C₁₈-Alkyl, C₁-C₁₈-Alkoxy, C₁-C₁₈-Alkylmercapto, C₁-C₁₈-Alkylamino, -CN, -NO₂, -Phenyl, Trifluormethyl, C₅-C₆-Cycloalkyl, -C=N-(C₁-C₁₈-Alkyl), 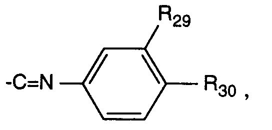 Imidazolyl, Pyrrazolyl, Triazolyl, Piperazinyl, Pyrrolyl, Oxazolyl, Benzoxazolyl, Benzthiazolyl, Benzimidazolyl, Morpholinyl, Piperidinyl oder Pyrrolidinyl bedeuten, M -CH₂-, -CH(CH₃)-, -C(CH₃)₂-, -CH=N-, -N=N-, -O-, -S-,-SO-, -SO₂- oder -NR₃₃- ist, R₂₉ und R₃₀ unabhängig voneinander Wasserstoff, Halogen, C₁-C₆-Alkyl, C₁-C₁₈Alkoxy oder -CN sind, R₃₁ und R₃₂ unabhängig voneinander Wasserstoff, Halogen oder C₁-C₆-Alkyl und R₃₃ Wasserstoff oder C₁-C₆-Alkyl bedeuten,
wobei in den obenerwähnten Formeln E jeweils Wasserstoff oder B bedeutet, mit der Massgabe, dass E in jeder Formel mindestens einmal B ist, und B die oben angegebene Bedeutung hat.

5. Verfahren gemäss Anspruch 4, gekennzeichnet durch die Verwendung von Chinacridonen der Formel VIII, worin R₁₀ und R₁₁ unabhängig voneinander Wasserstoff, Chlor oder Methyl bedeuten und E die oben angegebene Bedeutung hat, und/oder
Pyrrolo[3,4-c]pyrrolen der Formel XVII, worin G und L gleich sind und eine Gruppe der Formel 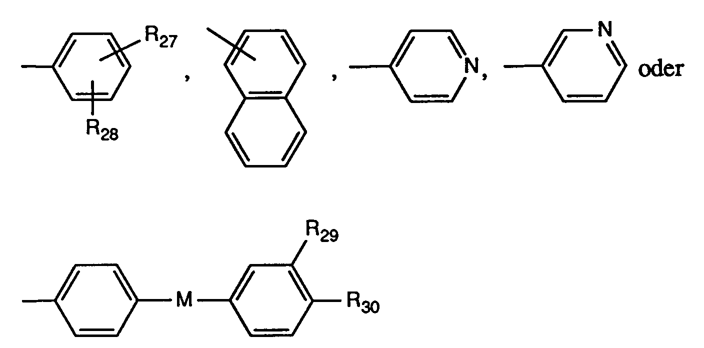 sind,
worin R₂₇ und R₂₈ unabhängig voneinander Wasserstoff, Chlor, Brom, C₁-C₄-Alkyl, C₁-C₆-Alkoxy, C₁-C₆-Alkylamino, CN oder Phenyl bedeuten,
M -O-, -NR₃₃-, -N=N- oder -SO₂- ist,
R₂₉ und R₃₀ Wasserstoff und R₃₃ Wasserstoff, Methyl oder Ethyl bedeuten und E die oben angegebene Bedeutung hat.

6. Verfahren gemäss Anspruch 5, gekennzeichnet durch die Verwendung von Chinacridonen der Formeln 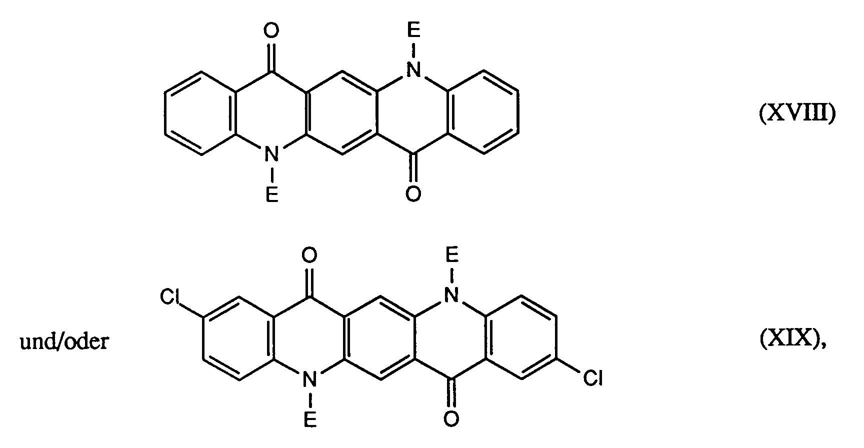 und/oder Pyrrolo[3,4-c]pyrrolen der Formel 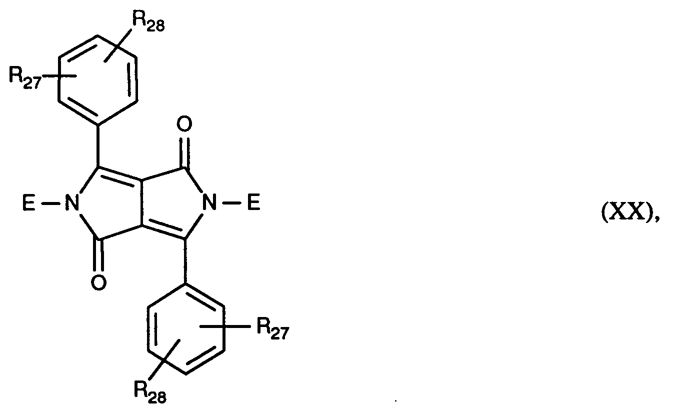 worin R₂₇ und R₂₈ unabhängig voneinander Wasserstoff, Methyl, tert.-Butyl, Chlor, Brom, CN oder Phenyl bedeuten,
wobei E in den Formeln XVIII, XIX und XX eine Gruppe der Formel 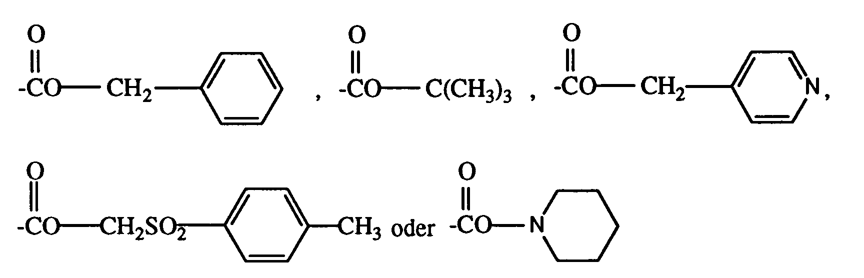 bedeutet.

## Claims

1. A process for the preparation of a synergistic mixture of at least two different pigments of the quinacridone, anthraquinone, perylene, indigo, quinophthalone, isoindolinone, isoindoline, dioxazine, phthalocyanine, diketopyrrolopyrrole or azo series, which comprises mixing at least two compounds of formula
A(B)ₓ, (I),
wherein x is an integer from 1 to 4,
A is the radical of a dye of the quinacridone, anthraquinone, perylene, indigo, quinophthalone, isoindolinone, isoindoline, dioxazine, phthalocyanine, diketopyrrolopyrrole or azo series, which contains x N atoms linked to B,
B is a group of formula 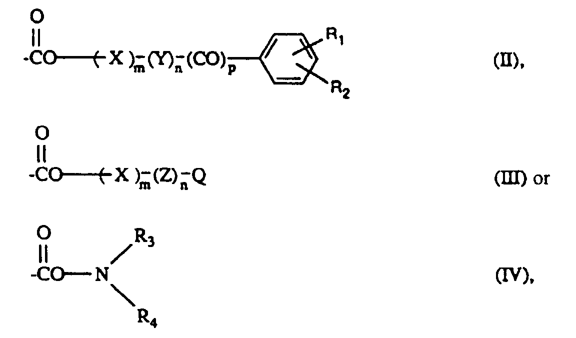 and, when x is 2, 3 or 4, may also be one, two or three hydrogen atoms, in which formulae II, III and IV
m, n and p are each independently of one another 0 or 1,
X is C₁-C₁₄alkylene or C₂-C₈alkenylene,
Y is a group -V-(CH₂)_{q}-,
Z is a group -V-(CH₂)ᵣ-,
V is C₃-C₆cycloalkylene,
q is an integer from 1 to 6, and
r is an integer from 0 to 6,
R₁ and R₂ are each independently of the other hydrogen, C₁-C₆alkyl, C₁-C₄alkoxy,
halogen, CN, NO₂, unsubstituted phenyl or phenoxy or phenyl or phenoxy which are substituted by C₁-C₄alkyl, C₁-C₄alkoxy or halogen,
Q is hydrogen, CN, Si(R₁)₃,
a group C(R₅) (R₆) (R₇),
wherein R_{5,} R₆ and R₇ are each independently of one another hydrogen or halogen and at least one of R₅, R₆ and R₇ is halogen, 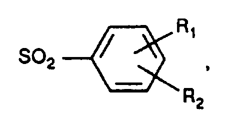 a group
wherein R₁ and R₂ are as defined above,
a group SO₂R₈ or SR₈, wherein R₈ is C₁-C₄alkyl,
a group CH(R₉)₂, wherein R₉ is unsubstituted phenyl or phenyl which is substituted by C₁-C₄alkyl, C₁-C₄alkoxy or halogen,
or
a group of formula 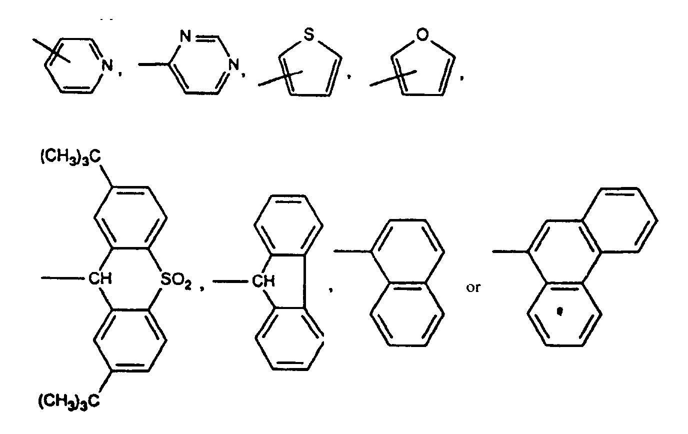 R₃ and R₄ are each independently of the other hydrogen, C₁-C₁₈alkyl, a group 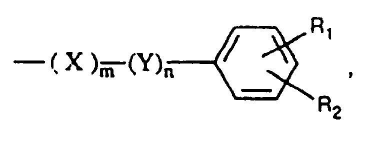 wherein X, Y, R₁, R₂, m and n are as defined above, or R₃ and R₄, together with the nitrogen atom to which they are attached, form a pyrrolidinyl, piperidinyl or morpholinyl radical,
in powder form by conventional methods and dissolving the mixture in an organic solvent, or first dissolving the individual components in an organic solvent and mixing the solutions, and subsequently precipitating the pigment mixture consisting of the corresponding pigments of formula
A(H)x,
wherein A and x have the meanings given above, from the dissolved mixture by means of thermal or chemical treatment.

2. A process according to claim 1, which comprises the use of two different components of formula I, wherein x is 1 or 2 and B is a group of formula 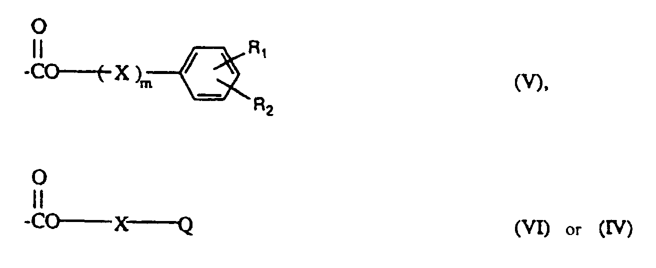 and, if x is 2, may also be one hydrogen atom, and in formulae IV, V and VI
m is 0 or 1,
X is C₁-C₄alkylene or C₂-C₅alkenylene,
R₁ and R₂ are each independently of the other hydrogen, C₁-C₄alkyl, methoxy, chloro or NO₂, and
Q is hydrogen, CN, CCl₃, a group 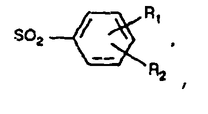 SO₂CH₃ or SCH₃.
R₃ and R₄ are each independently of the other hydrogen, C₁-C₄alkyl or a group 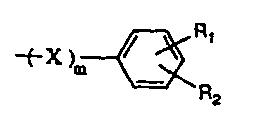 or R₃ and R₄ together form a piperidinyl radical.

3. A process according to claim 1, which comprises the use of two different components of formula I, wherein x is 2 and B is twice a group of formula

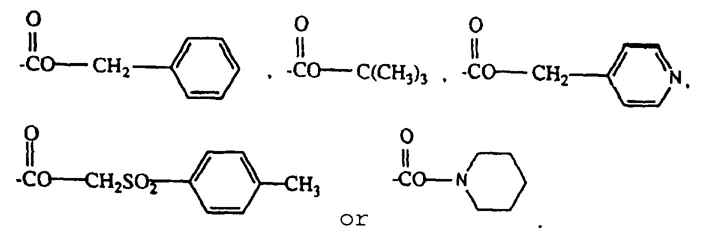

4. A process according to claim 1, which comprises the use of two different compounds selected from
a) perylenecarboximides of formula 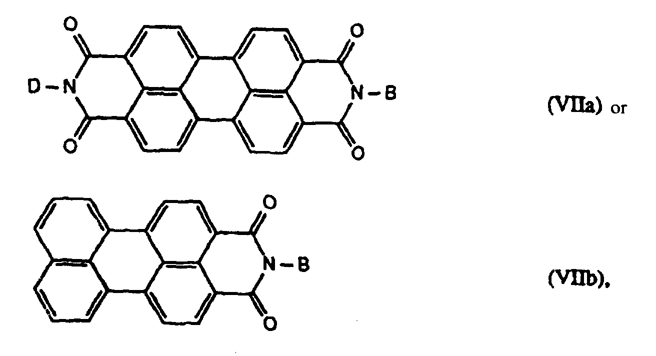 wherein D is hydrogen, C₁-C₆alkyl, unsubstituted or halogen- or C₁-C₄alkyl-substituted phenyl, benzyl or phenethyl, or is B,
b) quinacridones of formula 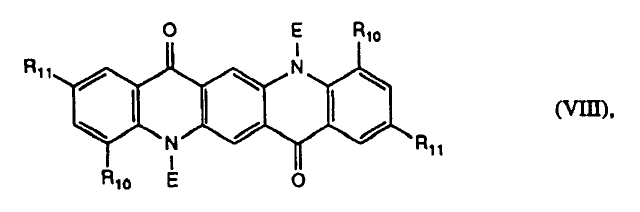 wherein R₁₀ and R₁₁ are each independently of the other hydrogen, halogen, C₁-C₁₈alkyl, C₁-C₄alkoxy or phenyl,
c) dioxazines of formula 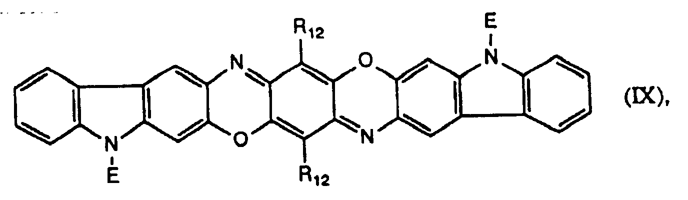 wherein R₁₂ is hydrogen, halogen or C₁-C₁₈alkyl,
d) isoindolines of formulae 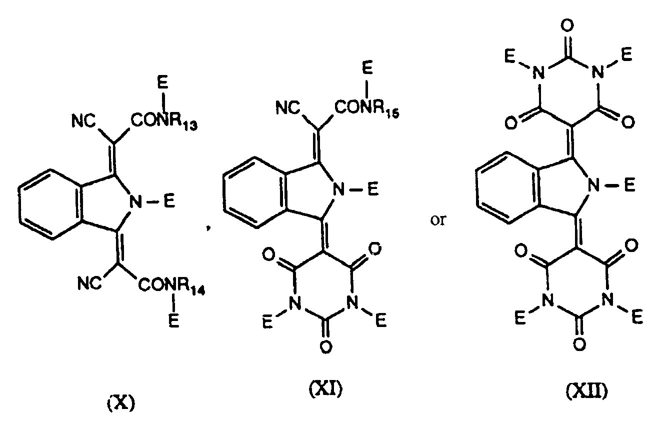 wherein R₁₃ is a group 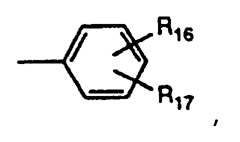 R₁₄ is hydrogen, C₁-C₁₈alkyl, benzyl or a group 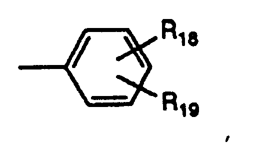 R₁₅ has the same meaning as R₁₃,
R₁₆, R₁₇, R₁₈ and R₁₉ are each independently of one another hydrogen, C₁-C₁₈alkyl, C₁-C₄alkoxy, halogen or trifluoromethyl,
e) indigo derivatives of formula 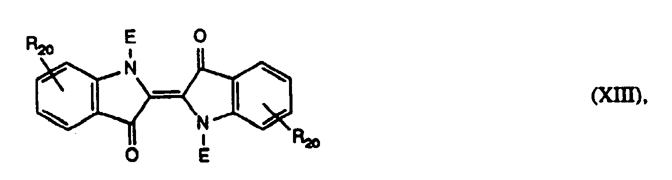 wherein R₂₀ is hydrogen, CN, C₁-C₄alkyl, C₁-C₄alkoxy or halogen,
f) benzimidazoloneazo compounds of formula 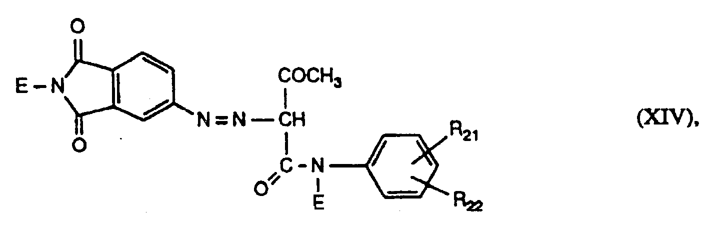 wherein R₂₁ and R₂₂ are each independently of the other hydrogen, halogen, C₁-C₄alkyl or C₁-C₄alkoxy,
g) anthraquinonoid compounds of formula 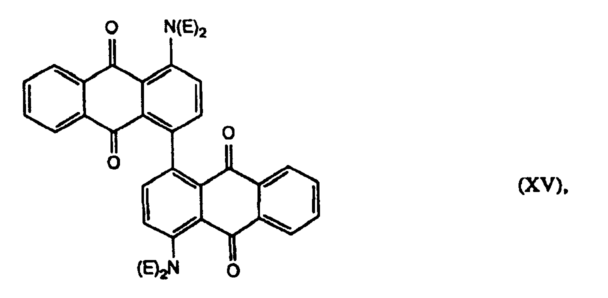
h) phthalocyanines of formula 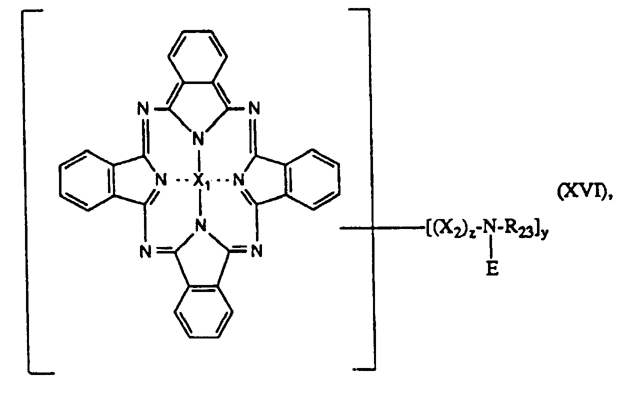 wherein
X₁ is H₂, Zn, Cu, Ni, Fe or V,
X₂ is -CH(R₂₄)- or -SO₂-,
R₂₃ is hydrogen, C₁-C₄alkyl, -N(E)R₂₄, -NHCOR₂₅, -COR₂₅ or 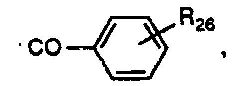 R₂₄ is hydrogen or C₁-C₄alkyl, R₂₅ is C₁-C₄alkyl and R₂₆ is hydrogen, halogen, C₁-C₄alkyl or C₁-C₄alkoxy,
z is 0 or 1 and y is a number from 1 to 4,
and
i) pyrrolo[3,4-c]pyrroles of formula 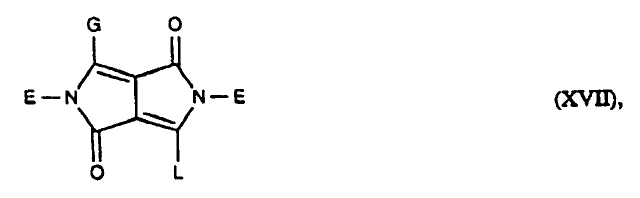 wherein G and L are each independently of the other a group of formula 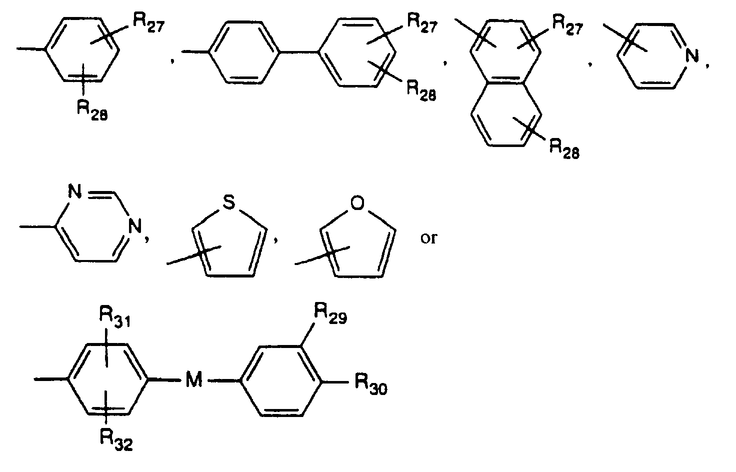 wherein
R₂₇ and R₂₈ are each independently of the other hydrogen, halogen, C₁-C₁₈alkyl, C₁-C₁₈alkoxy, C₁-C₁₈alkylmercapto, C₁-C₁₈alkylamino, -CN, -NO₂, phenyl,
trifluoromethyl, C₅-C₆cycloalkyl, -C=N-(C₁-C₁₈alkyl), 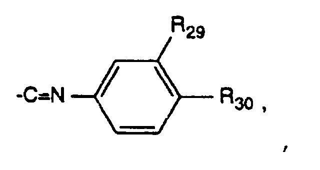 imidazolyl, pyrazolyl, triazolyl, piperazinyl, pyrrolyl, oxazolyl, benzoxazolyl, benzothiazolyl, benzimidazolyl, morpholinyl, piperidinyl or pyrrolidinyl,
M is -CH₂-, CH(CH₃)-, -C(CH₃)₂-, CH=N-, -N=N-, -O-, -S-, -SO-, -SO₂- or -NR₃₃-,
R₂₉ and R₃₀ are each independently of the other hydrogen, halogen, C₁-C₆alkyl, C₁-C₁₈alkoxy or -CN, R₃₁ and R₃₂ are each independently of the other hydrogen, halogen or C₁-C₆alkyl and R₃₃ is hydrogen or C₁-C₆alkyl,
in which formulae above each E is hydrogen or is B, with the proviso that E in each formula is B at least once and B is as defined above.

5. A process according to claim 4, which comprises the use of quinacridones of formula VIII, wherein R₁₀ and R₁₁ are each independently of the other hydrogen, chloro or methyl and E is as defined above, and/or
pyrrolo[3,4-c]pyrroles of formula XVII, wherein G and L are identical and are a group of formula 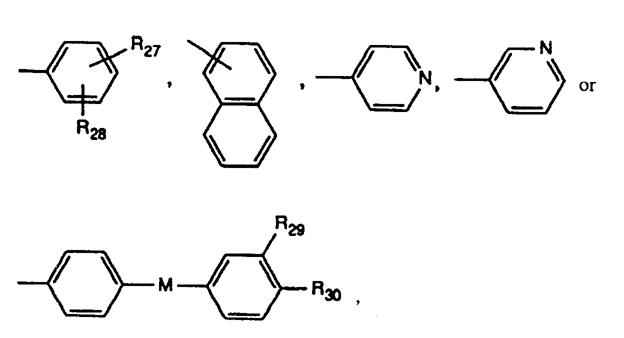 wherein R₂₇ and R₂₈ are each independently of the other hydrogen, chloro, bromo, C₁-C₄alkyl, C₁-C₆alkoxy, C₁-C₆alkylamino, CN or phenyl,
M is -O-, -NR₃₃-, -N=N- or -SO₂-,
R₂₉ and R₃₀ are hydrogen and R₃₃ is hydrogen, methyl or ethyl and E is as defined above.

6. A process according to claim 5, which comprises the use of quinacridones of formulae 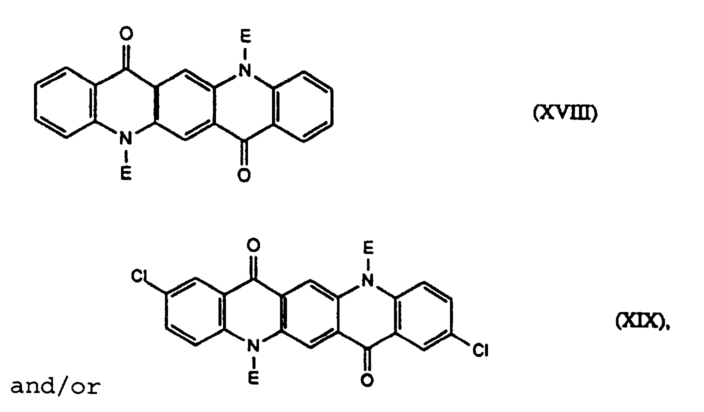 and/or pyrrolo[3,4-c]pyrroles of formula 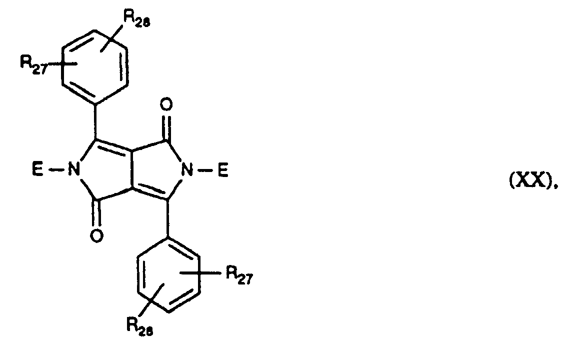 wherein R₂₇ and R₂₈ are each independently of the other hydrogen, methyl, tert-butyl, chloro, bromo, CN or phenyl,
and E in formulae XVIII, XIX and XX is a group of formula

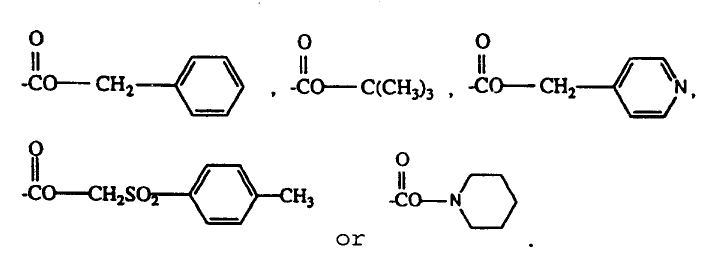

## Revendications

1. Procédé de préparation de mélanges synergétiques de pigments constitués d'au moins deux différents pigments de la série des colorants quinacridone, anthraquinone, pérylène, indigo, quinophtalone, isoindolinone, isoindoline, dioxazine, phtalocyanine, dicétopyrrolopyrrole ou azoïque, caractérisé en ce qu'on mélange sous forme de poudre selon les procédés usuels au moins deux composés de formule
A(B)ₓ, (I),
dans laquelle x représente un nombre entier entre 1 et 4,
**A** représente le résidu d'un colorant de la série des colorants quinacridone, anthraquinone, pérylène, indigo, quinophtalone, isoindolinone, isoindoline, dioxazine, phtalocyanine, dicétopyrrolopyrrole ou azoïque, qui contient x atomes d'azote liés à **B**,
**B** représente un groupe de formule 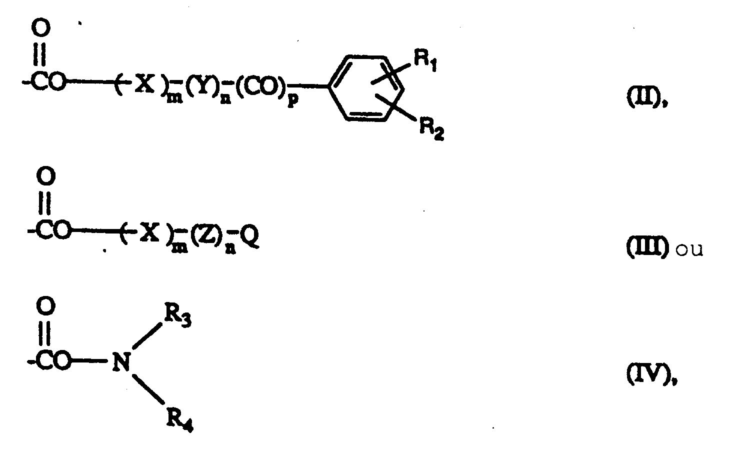 et, lorsque x représente 2, 3 ou 4, peut être aussi un, deux ou trois atomes d'hydrogène,
m, n et p étant dans les formules II, III et IV indépendamment les uns des autres zéro ou 1,
X représente un groupe alkylène en C₁ à C₁₄ ou alcénylène en C₂ à C₈,
Y représente un groupe -V-(CH₂)q-,
Z représente un groupe -V-(CH₂)r-,
Q représente un groupe cycloalkylène en C₃ à C₆,
q représente un nombre de 1 à 6 et
r un nombre de zéro à 6,
R₁ et R₂ représentent indépendamment l'un de l'autre un atome d'hydrogène, un groupe alkyle en C₁ à C₆, alcoxy en C₁ à C₄, un atome d'halogène, un groupe CN, NO₂, phényle ou phénoxy non substitué ou substitué par un groupe alkyle en C₁ à C₄, alcoxy en C₁ à C₄ ou un atome d'halogène,
Q représente un atome d'hydrogène, un groupe CN.
Si (R₁)₃,
un groupe C (R₅) (R₆) (R₇),
dans lequel R₅, R₆ et R₇ sont indépendamment les uns des autres un atome d'hydrogène ou d'halogène et au moins un des groupes R₅, R₆ et R₇ représente un atome d'halogène,
un groupe 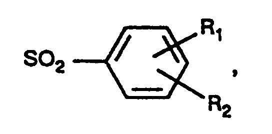 dans lequel R₁ et R₂ ont la signification indiquée ci-dessus,
un groupe SO₂R₈ ou SR₈, dans lequel R₈ est un groupe alkyle en C₁ à C₄, un groupe CH(R₉)₂, dans lequel R₉ représente un groupe phényle non substitué ou substitué par un groupe alkyle en C₁ à C₄, alcoxy en C₁ à C₄ ou un atome d'halogène,
ou
un groupe de formule 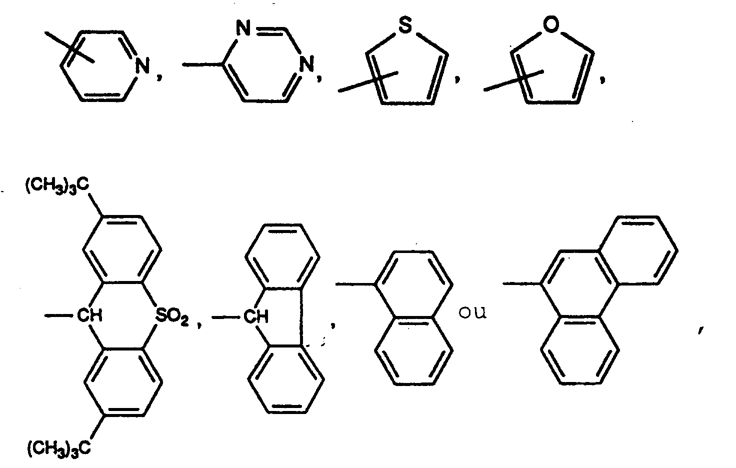 R₃ et R₄ représentent indépendamment l'un de l'autre un atome d'hydrogène, un groupe alkyle en C₁ à C₁₈, un groupe 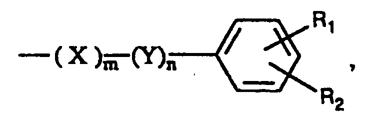 dans lequel X, Y, R₁, R₂, m et n ont la signification indiquée ci-dessus, ou R₃ et R₄ forment ensemble avec l'atome d'azote auquel ils sont liés un groupe pyrrolidinyle, pipéridinyle ou morpholinyle,
et on les dissout dans un solvant organique ou on les dissout d'abord séparément et on mélange les solutions et on fait ensuite précipiter dans le mélange dissous par traitement thermique ou chimique, le mélange de pigments constitué des pigments correspondant à la formule
A(H)x,
dans laquelle **A** et **x** ont la signification indiquée ci-dessus.

2. Procédé selon la revendication 1, caractérisé par l'utilisation de deux composés différents de formule I, dans laquelle x est 1 ou 2 et B représente un groupe de formule 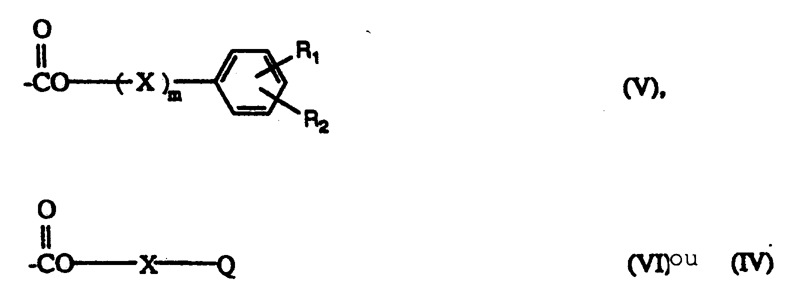 et, lorsque x représente 2, peut être une fois un atome d'hydrogène, formules IV, V et VI dans lesquelles
m représente un groupe alkylène en C₁ à C₄ ou alcénylène en C₂ à C₅,
R₁ et R₂ représentent indépendamment l'un de l'autre un atome d'hydrogène, un groupe alkyle en C₁ à C₄, méthoxy, un atome de chlore ou NO₂, et
Q représente un atome d'hydrogène, CN, CCl₃, un groupe 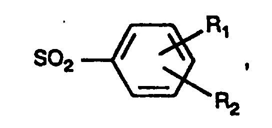 SO₂CH₃ ou SCH₃,
R₃ et R₄ représentent indépendamment l'un de l'autre un atome d'hydrogène, un groupe alkyle en C₁ à C₄ ou un groupe 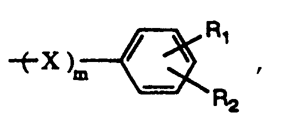 ou R₃ et R₄ forment ensemble un groupe pipéridinyle,

3. Procédé selon la revendication 1, caractérisé par l'utilisation de deux composés différents de formule I, dans laquelle x est 2 et B représente deux fois un groupe de formule

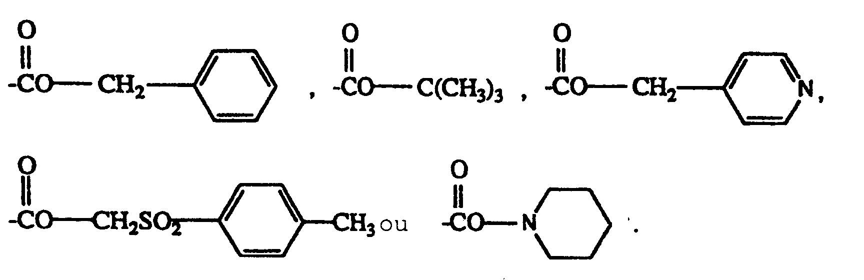

4. Procédé selon la revendication 1, caractérisé par l'utilisation de deux composés différents choisis parmi
a) les pérylènecarboxylimides de formule 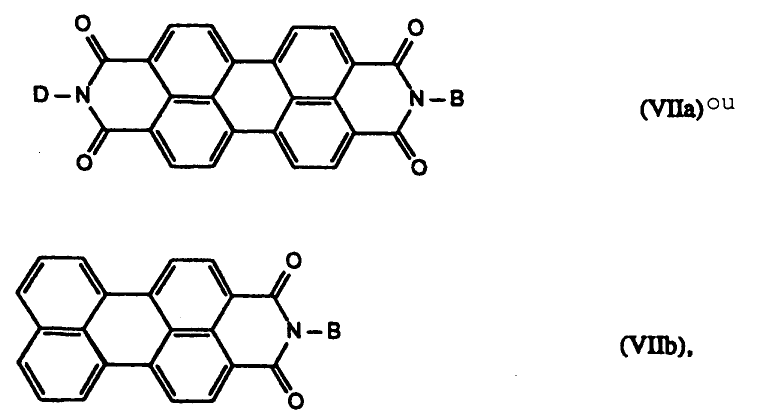 dans lesquelles D représente un atome d'hydrogène, un groupe alkyle en C₁ à C₆, un groupe phényle, benzyle ou phénéthyle ou B non substitué ou substitué par un atome d'halogène ou un groupe alkyle en C₁ à C₄,
b) les quinacridones de formule 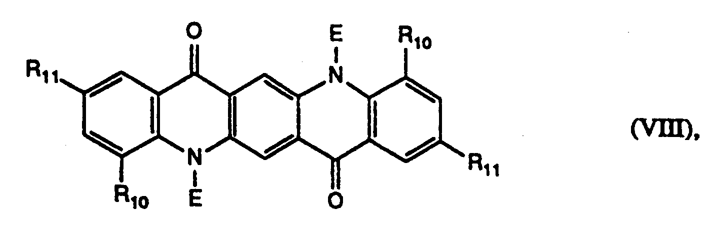 dans laquelle R₁₀ et R₁₁ représentent indépendamment l'un de l'autre un atome d'hydrogène, d'halogène, un groupe alkyle en C₁ à C₁₈, alcoxy en C₁ à C₄ ou phényle,
c) les dioxazines de formule 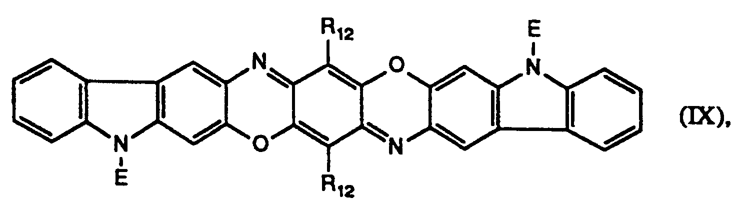 dans laquelle R₁₂ représente un atome d'hydrogène, d'halogène ou un groupe alkyle en C₁ à C₁₈,
d) les isoindolines des formules 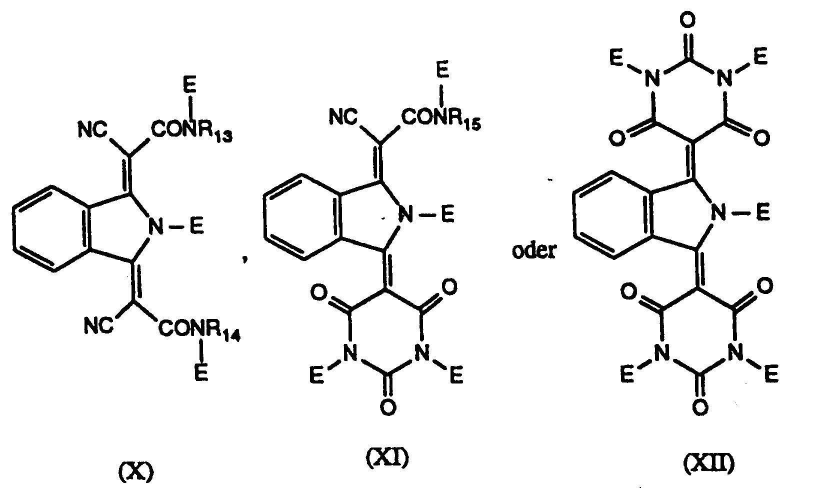 dans lesquelles R₁₃ représente un groupe 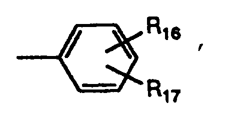 R₁₄ représente un atome d'hydrogène, un groupe alkyle en C₁ à C₁₈, benzyle ou un groupe 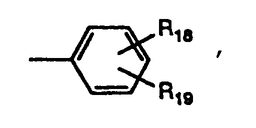 R₁₅ a la même signification que R₁₃,
R₁₆, R_{17,} R₁₈ et R₁₉ représentent indépendamment les uns des autres un atome d'hydrogène, un groupe alkyle en C₁ à C₁₈, alcoxy en C₁ à C₄, un atome d'halogène ou un groupe trifluorométhyle,
e) les dérivés indigo de formule 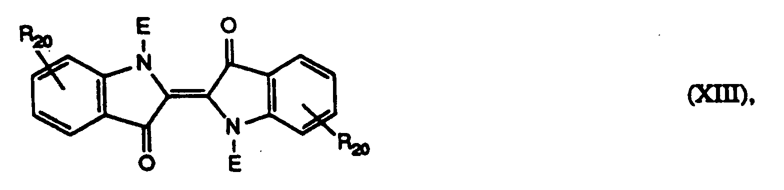 dans laquelle R₂₀ représente un atome d'hydrogène, un groupe CN, alkyle en C₁ à C₄, alcoxy en C₁ à C₄ ou un atome d'halogène,
f) les composés benzimidazolone-azoïques de formule 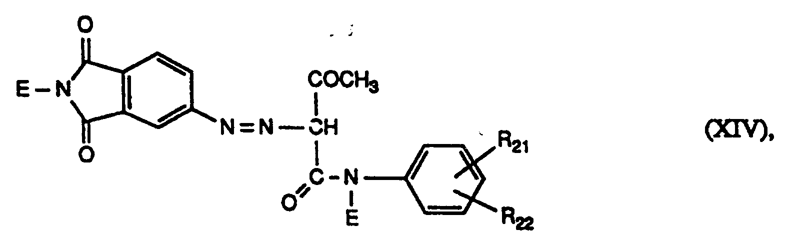 dans laquelle R₂₁ et R₂₂ représentent indépendamment les uns des autres un atome d'hydrogène, d'halogène, un groupe alkyle en C₁ à C₄ ou alcoxy en C₁ à C₄,
g) les composés anthraquinoïdes de formule 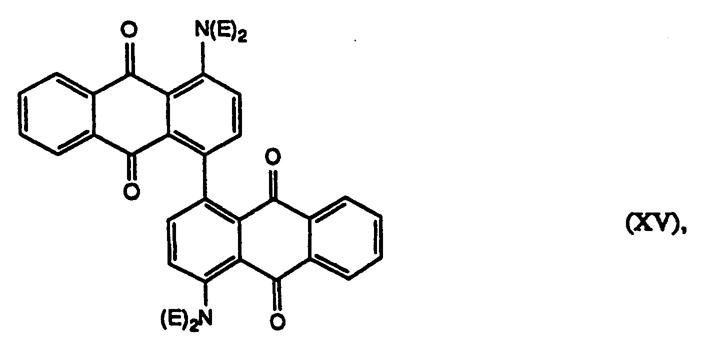
h) les phtalocyanines de formule 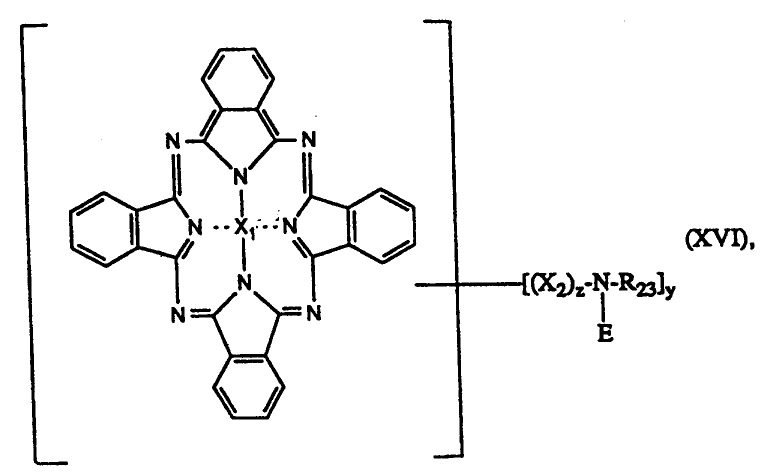 dans laquelle
X₁ représente H₂, Zn, Cu, Ni, Fe ou V,
X₂ représente -CH (R₂₄) - ou -SO₂-
R₂₃ représente un atome d'hydrogène, un groupe alkyle en C₁ à C₄, -N(E)R₂₄, NHCOR₂₅ ou 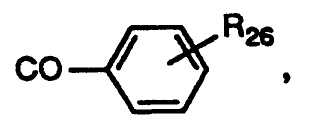 R₂₄ représente un atome d'hydrogène ou un groupe alkyle en C₁ à C₄, R₂₅ représente un groupe alkyle en C₁ à C₄ et R₂₆ représente un atome d'hydrogène, d'halogène, un groupe alkyle en C₁ à C₄ ou alcoxy en C₁ à C₄,
et
i) les pyrrolo[3,4-c]pyrroles de formule 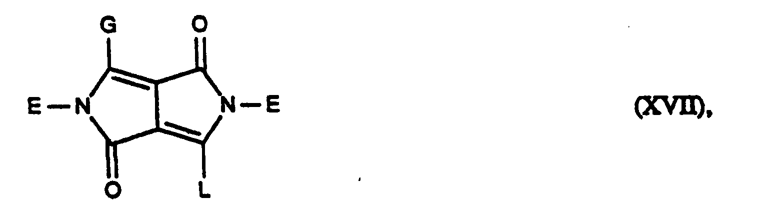 dans laquelle G et L représentent indépendamment l'un de l'autre un groupe de formule 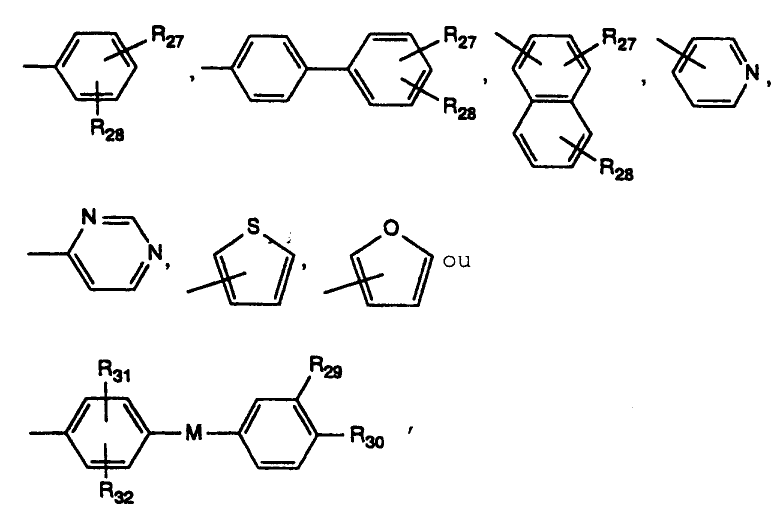 dans lesquelles
R₂₇ et R₂₈ représentent indépendamment l'un de l'autre un atome d'hydrogène, d'halogène, un groupe alkyle en C₁ à C₁₈, alcoxy en C₁ à C₁₈, alkylmercapto en C₁ à C₁₈, alkylamino en C₁ à C₁₈, -CN, -NO₂, -phényle, trifluorométhyle,, cycloalkyle en C₅ à C₆, -C=N-(alkyle en C₁ à C₁₈), 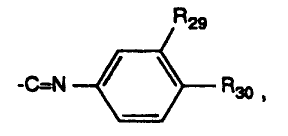 imidazolyle, pyrrazolyle, triazolyle, pipérazinyle, pyrrolyle, oxazolyle, benzoxazolyle, benzthiazolyle, benzimidazolyle, morpholinyle, pipéridinyle ou pyrrolidinyle,
M représente -CH₂-, -CH(CH₃)₂-, -C(CH₃)₂-, -CH=N-, -N=N-, -O-, -S-, -SO-, -SO₂- ou -NR₃₃-,
R₁₉ et R₂₀ représentent indépendamment l'un de l'autre un atome d'hydrogène, d'halogène, un groupe alkyle en C₁ à C₆, alcoxy en C₁ à C₁₈ ou -CN, R₃₁ et R₃₂ représentent indépendamment l'un de l'autre un atome d'hydrogène, d'halogène ou un groupe alkyle en C₁ à C₆ et R₃₃ représente un atome d'hydrogène ou un groupe alkyle en C₁ à C₆,
E représentant dans les formules ci-dessus mentionnées respectivement un atome d'hydrogène ou B, sous réserve que E soit au moins un fois B dans chaque formule, et que B ait la signification indiquée, pour laquelle les préférences mentionnées ci-dessus sont valables.

5. Procédé selon la revendication 4, caractérisé par l'utilisation de quinacridones de formule VIII, dans laquelle R₁₀ et R₁₁ représentent indépendamment l'un de l'autre un atome d'hydrogène, de chlore ou un groupe méthyle et E a la signification indiquée ci-dessus, et/ou de pyrrolo[3,4-c]pyrroles de formule XVII dans laquelle G et L sont identiques et représentent un groupe de formule 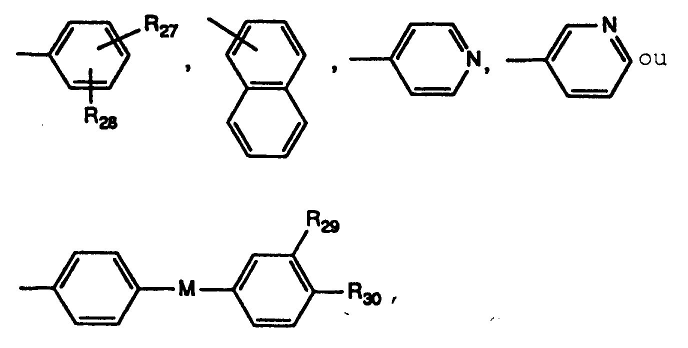 dans lesquelles R₂₇ et R₂₈ représentent indépendamment l'un de l'autre un atome d'hydrogène, de chlore, de brome, un groupe alkyle en C₁ à C₄, alcoxy en C₁ à C₆, alkylamino en C₁ à C₆, CN ou phényle,
M représente -O-, -NR₃₃, -N=N- ou -SO₂-,
R₂₉ et R₃₀ représentent un atome d'hydrogène et R₃₃ représente un atome d'hydrogène, un groupe méthyle ou éthyle et E a la signification indiquée ci-dessus.

6. Procédé selon la revendication 5, caractérisé par l'utilisation de quinacridones des formules 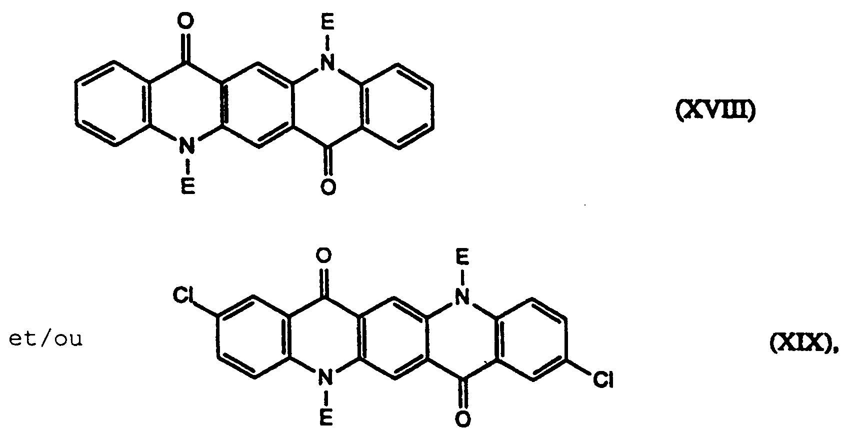 et/ou pyrrolo[3,4-c]pyrroles de formule 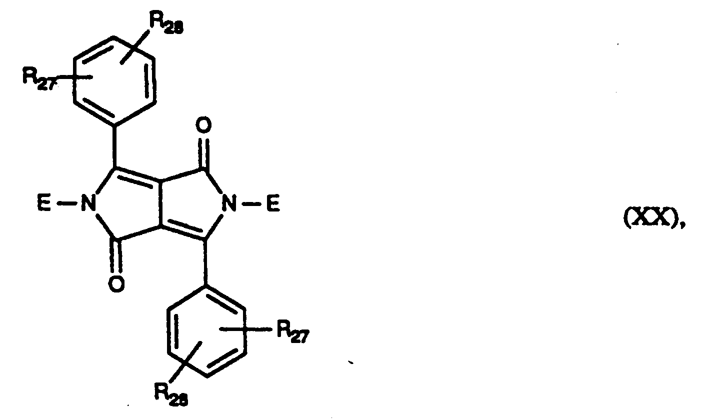 dans laquelle R₂₇ et R₂₈ représentent indépendamment l'un de l'autre un atome d'hydrogène, un groupe méthyle, tert.-butyle, un atome de chlore, de brome, CN ou un groupe phényle,
E représentant dans les formules XVIII, XIX et XX un groupe de formule
